(19) Europäisches Patentamt
European Patent Office
Office européen des brevets

(11) **EP 3 574 145 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **18700892.5**

(22) Anmeldetag: **16.01.2018**

(51) Internationale Patentklassifikation (IPC):
**E01F 7/04** (2006.01)     **B21F 27/04** (2006.01)

(52) Gemeinsame Patentklassifikation (CPC):
**E01F 7/04; B21F 27/04**

(86) Internationale Anmeldenummer:
**PCT/EP2018/050968**

(87) Internationale Veröffentlichungsnummer:
**WO 2018/137967 (02.08.2018 Gazette 2018/31)**

(54) **DRAHTGEFLECHT UND VERFAHREN ZUR HERSTELLUNG EINER WENDEL FÜR EIN DRAHTGEFLECHT**

WIRE MESH AND METHOD FOR PRODUCING A COIL FOR A WIRE MESH

TREILLIS MÉTALLIQUE ET PROCÉDÉ PERMETTANT DE FABRIQUER UNE SPIRALE POUR UN TREILLIS MÉTALLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2017 DE 102017101755**

(43) Veröffentlichungstag der Anmeldung:
**04.12.2019 Patentblatt 2019/49**

(73) Patentinhaber: **Geobrugg AG**
**8590 Romanshorn (CH)**

(72) Erfinder: **WENDELER-GÖGGELMANN, Corinna**
**9100 Herisau (CH)**

(74) Vertreter: **Daub, Thomas**
**Patent- und Rechtsanwaltskanzlei Daub**
**Bahnhofstrasse 5**
**88662 Überlingen (DE)**

(56) Entgegenhaltungen:
**WO-A1-99/43894      GB-A- 701 538**
**US-A- 1 926 114      US-A- 4 049 224**

**Beschreibung**

**Stand der Technik**

Die Erfindung betrifft ein Drahtgeflecht nach dem Oberbegriff des Anspruchs 1 sowie ein Verfahren zur Herstellung eines Drahtgeflechts nach dem Oberbegriff des Anspruchs 10.

Aus dem Stand der Technik sind Drahtgeflechte bekannt, die aus ineinander geflochtenen Wendeln hergestellt sind. Üblicherweise werden die Wendeln mittels eines Flechtmessers gebogen und in ein Geflecht eingeflochten.

Die Druckschriften US 1 926 114 A und WO 9943894 A1 beschreiben jeweils Drahtnetzgeflechte, welche aus ineinander gedrehten flachen Wendeln ausgebildet sind.

Die Aufgabe der Erfindung besteht insbesondere darin, ein gattungsgemäßes Drahtgeflecht mit vorteilhaften Eigenschaften hinsichtlich einer Belastbarkeit bereitzustellen. Die Aufgabe wird erfindungsgemäß durch die Merkmale der Patentansprüche 1 und 10 gelöst, während vorteilhafte Ausgestaltungen und Weiterbildungen der Erfindung den Unteransprüchen entnommen werden können.

**Vorteile der Erfindung**

Unabhängig von der Erfindung wird ein Drahtgeflecht, insbesondere ein Sicherheitsnetz, mit mehreren ineinander geflochtenen Wendeln, von denen wenigstens eine Wendel aus zumindest einem Einzeldraht, einem Drahtbündel, einer Drahtlitze, einem Drahtseil und/oder einem anderen Längselement mit zumindest einem Draht gefertigt ist und zumindest einen ersten Schenkel, zumindest einen zweiten Schenkel sowie zumindest eine den ersten Schenkel und den zweiten Schenkel miteinander verbindende Biegestelle umfasst, wobei in einer Frontalbetrachtung senkrecht zu einer Haupterstreckungsebene der Wendel der erste Schenkel zumindest mit einem ersten Steigungswinkel bezüglich einer Längsrichtung der Wendel verläuft, wobei in einer Querbetrachtung parallel zu der Haupterstreckungsebene der Wendel und senkrecht zu der Längsrichtung der Wendel die Biegestelle zumindest abschnittsweise mit einem von dem ersten Steigungswinkel, insbesondere über einen Rahmen von Fertigungsgenauigkeiten hinaus verschiedenen zweiten Steigungswinkel bezüglich der Längsrichtung der Wendel verläuft, beschrieben. Hierdurch kann vorteilhaft eine hohe Belastbarkeit erzielt werden. Außerdem kann eine hohe Sicherheit erzielt werden. Insbesondere kann ein Drahtgeflecht mit einer hohen Festigkeit, insbesondere einer hohen Zugfestigkeit, bereitgestellt werden. Vorteilhaft kann eine Geometrie von Wendeln und/oder Maschen eines Geflechts an eine zu erwartende Beanspruchung angepasst werden. Ferner kann eine Belastbarkeit von Kreuzungs- und/oder Knotenpunkten in einem Geflecht erhöht werden. Vorteilhaft können unterschiedliche Bereiche einer Wendel eines Drahtgeflechts individuell belastungsspezifisch optimiert werden. Außerdem kann hierdurch vorteilhaft ein Drahtgeflecht mit einer hohen Steifigkeit, insbesondere quer zum Geflecht und/oder entlang des Geflechts, bereitgestellt werden. Weiterhin können mechanische Eigenschaften eines Drahtgeflechts flexibel und/oder bedarfsweise angepasst werden.

Zudem wird unabhängig von der Erfindung ein Verfahren zur Herstellung einer Wendel für ein Drahtgeflecht, insbesondere für ein Sicherheitsnetz, insbesondere ein Verfahren zur Herstellung eines Drahtgeflechts, insbesondere eines Sicherheitsnetzes, wobei die Wendel aus zumindest einem Einzeldraht, einem Drahtbündel, einer Drahtlitze, einem Drahtseil und/oder einem anderen Längselement mit zumindest einem Draht gefertigt wird und wobei mittels Biegen zumindest ein erster Schenkel, zumindest ein zweiter Schenkel sowie zumindest eine den ersten

Schenkel und den zweiten Schenkel miteinander verbindende Biegestelle der Wendel gefertigt werden, sodass in einer ersten Betrachtung senkrecht zu einer Haupterstreckungsebene der Wendel der erste Schenkel und/oder der zweite Schenkel zumindest mit einem ersten Steigungswinkel bezüglich einer Längsrichtung der Wendel verläuft beschrieben. Hierbei ist die Wendel mittels Biegen derart gefertigt, dass in einer zweiten Betrachtung parallel zu der Haupterstreckungsebene der Wendel und senkrecht zu der Längsrichtung der Wendel die Biegestelle zumindest abschnittsweise mit einem von dem ersten Steigungswinkel verschiedenen zweiten Steigungswinkel bezüglich der Längsrichtung der Wendel verläuft. Hierdurch kann vorteilhaft eine hohe Belastbarkeit erzielt werden. Außerdem kann eine hohe Sicherheit erzielt werden. Insbesondere kann ein Drahtgeflecht mit einer hohen Festigkeit, insbesondere einer hohen Zugfestigkeit, bereitgestellt werden. Vorteilhaft kann eine Geometrie von Wendeln und/oder Maschen eines Geflechts an eine zu erwartende Beanspruchung angepasst werden. Ferner kann eine Belastbarkeit von Kreuzungs- und/oder Knotenpunkten in einem Geflecht erhöht werden. Vorteilhaft können unterschiedliche Bereiche einer Wendel eines Drahtgeflechts individuell belastungsspezifisch optimiert werden. Außerdem kann hierdurch vorteilhaft ein Drahtgeflecht mit einer hohen Steifigkeit, insbesondere quer zum Geflecht und/oder entlang des Geflechts, bereitgestellt werden. Weiterhin können mechanische Eigenschaften eines Drahtgeflechts flexibel und/oder bedarfsweise angepasst werden.

Erfindungsgemäß wird ein Drahtgeflecht, insbesondere ein Sicherheitsnetz, mit mehreren ineinander geflochtenen Wendeln, von denen wenigstens eine Wendel aus zumindest einem Einzeldraht, einem Drahtbündel, einer Drahtlitze, einem Drahtseil und/oder einem anderen Längselement mit zumindest einem Draht gefertigt ist und zumindest einen ersten Schenkel, zumindest einen zweiten Schenkel sowie zumindest eine den ersten Schenkel und den zweiten Schenkel miteinander verbindende Biegestelle umfasst, wobei in einer Längsbetrachtung parallel zu einer Längsrichtung der Wendel die Biegestelle zumindest einen Biegebereich mit einer Biegekrümmung und zumindest einen mit dem ersten Schenkel verbundenen ersten Übergangsbereich mit einer von der Biegekrümmung verschiedenen ersten Übergangskrümmung umfasst, vorgeschlagen. Hierdurch können vorteilhafte Eigenschaften hinsichtlich einer Belastbarkeit erzielt werden. Außerdem kann eine hohe Sicherheit erzielt werden. Insbesondere kann ein Drahtgeflecht mit einer hohen Festigkeit, insbesondere einer hohen Zugfestigkeit, bereitgestellt werden. Vorteilhaft kann eine Geometrie von Wendeln und/oder Maschen eines Geflechts an eine zu erwartende Beanspruchung angepasst werden. Vorteilhaft können unterschiedliche Bereiche einer Wendel eines Drahtgeflechts individuell belastungsspezifisch optimiert werden. Außerdem kann hierdurch vorteilhaft ein Drahtgeflecht mit einer hohen Steifigkeit, insbesondere quer zum Geflecht und/oder entlang des Geflechts, bereitgestellt werden. Weiterhin können mechanische Eigenschaften eines Drahtgeflechts flexibel und/oder bedarfsweise angepasst werden. Außerdem kann ein Verhalten einer Biegestelle in einem Belastungsfall optimiert werden. Weiterhin kann bezüglich einer Biegestellen-Geometrie ein großer Parameterraum zur Verfügung gestellt werden.

Ferner betrifft die Erfindung ein Verfahren zur Herstellung einer Wendel für ein Drahtgeflecht, insbesondere für ein Sicherheitsnetz, insbesondere ein Verfahren zur Herstellung eines Drahtgeflechts, insbesondere eines Sicherheitsnetzes, wobei die Wendel aus zumindest einem Einzeldraht, einem Drahtbündel, einer Drahtlitze, einem Drahtseil und/oder einem anderen Längselement mit zumindest einem Draht gefertigt wird und wobei mittels Biegen zumindest ein erster Schenkel, zumindest ein zweiter Schenkel sowie zumindest eine den ersten Schenkel und den zweiten Schenkel miteinander verbindende Biegestelle der Wendel gefertigt werden. Es wird vorgeschlagen, dass die Wendel mittels Biegen derart gefertigt wird, dass in einer Längsbetrachtung parallel zu einer Längsrichtung der Wendel die Biegestelle zumindest einen Biegebereich mit einer Biegekrümmung und zumindest einen mit dem ersten Schenkel verbundenen ersten Übergangsbereich mit einer von der Biegekrümmung verschiedenen ersten Übergangskrümmung umfasst. Hierdurch können vorteilhafte Eigenschaften hinsichtlich einer Belastbarkeit erzielt werden. Außerdem kann eine hohe Sicherheit erzielt werden. Insbesondere kann ein Drahtgeflecht mit einer hohen Festigkeit, insbesondere einer hohen Zugfestigkeit, bereitgestellt werden. Vorteilhaft kann eine Geometrie von Wendeln und/oder Maschen eines Geflechts an eine zu erwartende Beanspruchung angepasst werden. Vorteilhaft können unterschiedliche Bereiche einer Wendel eines Drahtgeflechts individuell belastungsspezifisch optimiert werden. Außerdem kann hierdurch vorteilhaft ein Drahtgeflecht mit einer hohen Härte, insbesondere quer zum Geflecht und/oder entlang des Geflechts, bereitgestellt werden. Weiterhin können mechanische Eigenschaften eines Drahtgeflechts flexibel und/oder bedarfsweise angepasst werden. Außerdem kann ein Verhalten einer Biegestelle in einem Belastungsfall optimiert werden. Weiterhin kann bezüglich einer Biegestellen-Geometrie ein großer Parameterraum zur Verfügung gestellt werden.

Unabhängig von der Erfindung wird ein Drahtgeflecht, insbesondere ein Sicherheitsnetz, mit mehreren ineinander geflochtenen Wendeln, von denen wenigstens eine Wendel aus zumindest einem Einzeldraht, einem Drahtbündel, einer Drahtlitze, einem Drahtseil und/oder einem anderen Längselement mit zumindest einem Draht, der insbesondere aus einem hochfesten Stahl gefertigt ist, wobei der Draht bei einem Hin- und Herbiegeversuch um zumindest einen Biegezylinder mit einem Durchmesser von höchstens 2d jeweils um wenigstens 90° in entgegengesetzte Richtungen zumindest M-mal bruchfrei hin- und herbiegbar ist, wobei M, gegebenenfalls mittels Abrunden, als $C \cdot R^{-0,5} \cdot d^{-0,5}$ bestimmbar ist und wobei d ein Durchmesser des Drahts in mm, R eine Zugfestigkeit des Drahts in N mm$^{-2}$ und C ein Faktor von wenigstens 400 N$^{0,5}$ mm$^{0,5}$ ist, beschrieben. Hierdurch können vorteilhafte Eigenschaften hinsichtlich einer Verarbeitbarkeit und/oder einer Fertigbarkeit erzielt werden. Ferner kann ein belastbares Drahtgeflecht bereitgestellt werden. Außerdem kann eine hohe Sicherheit erzielt werden. Insbesondere kann ein Drahtgeflecht mit einer hohen Festigkeit, insbesondere einer hohen Zugfestigkeit, bereitgestellt werden. Vorteilhaft kann ein Drahtgeflecht mit ausbalancierten Eigenschaften hinsichtlich einer Härte sowie einer Zugfestigkeit bereitgestellt werden. Weiterhin können Drahtbrüche bei einer Herstellung von Drahtgeflechten vorteilhaft vermieden werden. Insbesondere kann vorteilhaft auf Testläufe bei einer Herstellung von Drahtgeflechten zumindest weitgehend verzichtet werden. Ferner können für ein Drahtgeflecht mit einer hohen Belastbarkeit geeignete Drähte einfach und/oder schnell und/oder zuverlässig identifiziert werden. Insbesondere kann ein gegenüber einem Hin- und Herbiegeversuch gemäß ISO 7801 deutlich strengeres und/oder belastungsspezifischeres Auswahlverfahren für einen geeigneten Draht bereitgestellt werden.

Zudem wird unabhängig von der Erfindung ein Verfahren zur Identifikation eines geeigneten Drahts, insbesondere aus einem hochfesten Stahl, für ein Drahtgeflecht, insbesondere für ein Sicherheitsnetz, mit mehreren ineinander geflochtenen Wendeln, von denen wenigstens eine Wendel aus zumindest einem Einzeldraht, einem Drahtbündel, einer Drahtlitze, einem Drahtseil und/oder einem anderen Längselement mit dem geeigneten Draht gefertigt werden soll, beschrieben. Hierbei wird der Draht als geeignet identifiziert, wenn ein Teststück des Drahts bei einem Hin- und Herbiegeversuch um einen Biegezylinder mit einem Durchmesser von höchstens 2d jeweils um wenigstens 90° in entgegengesetzte Richtungen zumindest M-mal bruchfrei hin- und hergebogen werden kann, wobei M, gegebenenfalls mittels Abrunden, als $C \cdot R^{-0,5} \cdot d^{-0,5}$ bestimmbar ist und wobei d ein Durchmesser des Drahts in mm, R eine Zugfestigkeit des Drahts in N mm$^{-2}$ und C ein Faktor von wenigsten 400 N$^{0,5}$ mm$^{0,5}$ ist. Hierdurch können vorteilhafte Eigenschaften hinsichtlich einer Belastbarkeit erzielt werden. Außerdem kann eine hohe Sicherheit erzielt werden. Insbesondere kann ein Drahtgeflecht mit einer hohen Festigkeit, insbesondere einer hohen Zugfestigkeit, bereitgestellt werden. Vorteilhaft kann ein Drahtgeflecht mit ausbalancierten Eigenschaften hinsichtlich einer Steifigkeit sowie einer Zugfestigkeit bereitgestellt werden. Weiterhin können Drahtbrüche bei einer Herstellung von Drahtgeflechten vorteilhaft vermieden werden. Insbesondere kann vorteilhaft auf Testläufe bei einer Herstellung von Drahtgeflechten zumindest weitgehend verzichtet werden. Ferner können für ein Drahtgeflecht mit einer hohen Belastbarkeit geeignete Drähte einfach und/oder schnell und/oder zuverlässig identifiziert werden.

Unabhängig von der Erfindung wird ein Drahtgeflecht, insbesondere ein Sicherheitsnetz, mit mehreren ineinander geflochtenen Wendeln, von denen wenigstens eine Wendel aus zumindest einem Einzeldraht, einem Drahtbündel, einer Drahtlitze, einem Drahtseil und/oder einem anderen Längselement mit zumindest einem Draht aus einem hochfesten Stahl gefertigt ist und eine Mehrzahl von Schenkeln, eine Mehrzahl von jeweils zwei Schenkel verbindenden Biegestellen sowie entlang einer Frontalrichtung senkrecht zu einer Haupterstreckungsebene der Wendel eine Quererstreckung aufweist, wobei ein der Wendel entnommenes Teststück der Wendel, umfassend wenigstens fünf Schenkel und wenigstens vier Biegestellen, bei einem Pressversuch zwischen parallelen Platten, welcher ein Pressen mittels Bewegen der Platten entlang einer Pressstrecke parallel zu der Frontalrichtung beinhaltet, eine Federkennlinie zeigt, die in einem Pressstrecke-Kraft-Diagramm ausgehend von einem Beginn der Pressstrecke eine zumindest annähernd linear verlaufende oder linear verlaufende erste Teilkennlinie mit einer ersten Steigung aufweist, beschrieben. Das Pressstrecke-Kraft-Diagramm ist hierbei insbesondere ein Weg-Kraft-Diagramm. Hierdurch können vorteilhafte Eigenschaften hinsichtlich einer Belastbarkeit erzielt werden. Außerdem kann eine hohe Sicherheit erzielt werden. Insbesondere kann ein Drahtgeflecht mit einer hohen Festigkeit, insbesondere einer hohen Zugfestigkeit, bereitgestellt werden. Vorteilhaft kann ein Drahtgeflecht mit ausbalancierten Eigenschaften hinsichtlich einer Härte sowie einer Zugfestigkeit bereitgestellt werden. Ferner kann ein Drahtgeflecht mit einer hohen Beanspruchbarkeit hinsichtlich quer zum Geflecht wirkender Kräfte, insbesondere durch einschlagende Gegenstände, bereitgestellt werden. Außerdem kann eine Eignung eines Geflechts auf einfache und/oder schnelle und/oder zuverlässige Weise bestimmt werden.

Unabhängig von der Erfindung wird eine Biegevorrichtung zur Herstellung eines Drahtgeflechts, insbesondere eines Sicherheitsnetzes, welches mehrere ineinander geflochtene Wendeln aufweist, von denen wenigstens eine Wendel aus zumindest einem Wendelrohling, nämlich einem Einzeldraht, einem Drahtbündel, einer Drahtlitze, einem Drahtseil und/oder einem anderen Längselement, mit zumindest einem Draht gefertigt ist, mit einer Biegeeinheit, welche zumindest einen Biegedorn und zumindest einen Biegetisch aufweist, der zu einem Biegen des Wendelrohlings um den Biegedorn vorgesehen ist und der vollständig um den Biegedorn umlaufend gelagert ist, mit einer Vorschubeinheit, die zu einem Vorschieben des Wendelrohlings entlang einer Vorschubachse in eine Vorschubrichtung vorgesehen ist, und mit einer Geometrieeinstelleinheit, die zu einem Einstellen einer Geometrie der Wendel vorgesehen ist, beschrieben. Hierdurch können vorteilhafte Eigenschaften hinsichtlich einer Fertigung erzielt werden. Insbesondere kann bezüglich einer Fertigung eines Drahtgeflechts ein großer Parameterraum zur Verfügung gestellt werden. Außerdem kann eine Geometrie von Wendeln und/oder Maschen eines Drahtgeflechts variabel und/oder bedarfsweise angepasst werden. Ferner kann eine schnelle und/oder zuverlässige Fertigung ermöglicht werden. Außerdem kann eine flexibel und/oder umfassend einstellbare Biegevorrichtung bereitgestellt werden. Weiterhin kann ein hoher Durchsatz bei einer Fertigung erzielt werden. Außerdem kann auf ein insbesondere zeit- und/oder energieaufwändiges Abbremsen bewegter Teile bei einem Biegen einer Wendel eines Drahtgeflechts weitgehend verzichtet werden. Zudem kann eine wartungsarme Biegevorrichtung bereitgestellt und/oder können Stillstandszeiten beispielsweise aufgrund von Wartungen reduziert werden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Darunter, dass ein Verfahren zu einem Zweck "vorgesehen" ist, soll insbesondere verstanden werden, dass das Verfahren zumindest einen Verfahrensschritt beinhaltet, der speziell auf den Zweck abzielt und/oder dass das Verfahren gezielt auf den Zweck gerichtet ist und/oder dass das Verfahren einer Erfüllung des Zwecks dient und auf diese Erfüllung hin zumindest teilweise optimiert ist. Darunter, dass ein Verfahrensschritt zu einem Zweck "vorgesehen" ist, soll insbesondere verstanden werden, dass der Verfahrensschritt speziell auf den Zweck abzielt und/oder dass der Verfahrensschritt gezielt auf den Zweck gerichtet ist und/oder dass der Verfahrensschritt einer Erfüllung des Zwecks dient und auf diese Erfüllung hin zumindest teilweise optimiert ist.

Es kann vorteilhaft ein belastbares und/oder hinsichtlich eines Anforderungsprofils angepasst herstellbares Drahtgeflecht und/oder ein flexibel anpassbares und/oder zuverlässiges Verfahren zu dessen Herstellung bereitgestellt werden. Vorteilhaft können mechanische Eigenschaften von Biegestellen und/oder Verknüpfungspunkten und/oder Schenkeln und/oder Geflechtwendeln unabhängig aber auch synergetisch optimiert und/oder angepasst werden. Ferner wird eine einfach anwendbare und/oder zuverlässige Ergebnisse liefernde Methode für eine Qualitätskontrolle bereitgestellt.

Insbesondere ist die Wendel aus einem Längselement, nämlich einem Einzeldraht, einem Drahtbündel, einer Drahtlitze, einem Drahtseil und/oder einem anderen Längselement, welches zumindest den Draht umfasst, gefertigt.

Unter einem "Draht" soll in diesem Zusammenhang insbesondere ein länglicher und/oder dünner und/oder zumindest maschinell biegbarer und/oder biegsamer Körper verstanden werden. Vorteilhaft weist der Draht entlang seiner Längsrichtung einen zumindest im Wesentlichen konstanten, insbesondere kreisförmigen oder elliptischen Querschnitt auf. Besonders vorteilhaft ist der Draht als ein Runddraht ausgebildet. Es ist aber auch denkbar, dass der Draht zumindest abschnittsweise oder vollständig als ein Flachdraht, ein Vierkantdraht, ein polygonaler Draht und/oder ein Profildraht ausgebildet ist. Beispielsweise kann der Draht zumindest teilweise oder auch vollständig aus Metall, insbesondere einer Metalllegierung, und/oder organischem und/oder anorganischem Kunststoff und/oder einem Kompositmaterial und/oder einem anorganischen nichtmetallischen Material und/oder einem keramischen Material ausgebildet sein. Es ist beispielsweise denkbar, dass der Draht als ein Polymerdraht oder ein Kunststoffdraht ausgebildet ist. Insbesondere kann der Draht als ein Verbunddraht ausgebildet sein, beispielsweise als ein Metall-organischer Verbunddraht und/oder ein Metall-anorganischer Verbunddraht und/oder ein Metall-Polymer-Verbunddraht und/oder ein Metall-Metall-Verbunddraht oder dergleichen. Insbesondere ist denkbar, dass der Draht zumindest zwei unterschiedliche Materialien umfasst, die insbesondere einer Verbundgeometrie gemäß relativ zueinander angeordnet und/oder zumindest teilweise miteinander vermischt sind. Vorteilhaft ist der Draht als ein Metalldraht, insbesondere als ein Stahldraht, insbesondere als ein Edelstahldraht ausgebildet. Weist die Wendel mehrere Drähte auf, sind diese vorzugsweise identisch. Es ist aber auch denkbar, dass die Wendel mehrere Drähte aufweist, die sich insbesondere hinsichtlich ihres Materials und/oder ihres Durchmessers und/oder ihres Querschnitts unterscheiden. Vorzugsweise weist der Draht eine insbesondere korrosionsbeständige Beschichtung und/oder Ummantelung wie beispielsweise eine Zinkbeschichtung und/oder eine Aluminium-Zink-Beschichtung und/oder eine Kunststoffbeschichtung und/oder eine PET-Beschichtung und/oder eine Metalloxidbeschichtung und/oder eine Keramikbeschichtung oder dergleichen auf.

Vorteilhaft ist die Quererstreckung der Wendel größer, insbesondere erheblich größer als ein Durchmesser des Drahts und/oder als ein Durchmesser des Längselements, aus dem die Wendel gefertigt ist. Je nach Anwendung und insbesondere je nach gewünschter Belastbarkeit und/oder je nach gewünschten Federeigenschaften des Drahtgeflechts, insbesondere in Frontalrichtung, kann die Quererstreckung beispielsweise zweimal oder dreimal oder fünfmal oder zehnmal oder 20-mal so groß sein wie der Durchmesser des Längselements, wobei auch dazwischenliegende Werte oder kleinere Werte oder größere Werte denkbar sind. Ebenso kann je nach Anwendung der Draht einen Durchmesser von beispielsweise etwa 1 mm, etwa 2 mm, etwa 3 mm, etwa 4 mm, etwa 5 mm, etwa 6 mm, etwa 7 mm oder noch mehr oder noch weniger oder auch einen Durchmesser eines dazwischenliegenden Werts aufweisen. Größere, insbesondere erheblich größere Durchmesser sind ferner denkbar, falls das Längselement mehrere Komponenten, insbesondere mehrere Drähte, umfasst, wie beispielsweise im Fall eines Drahtseils oder einer Litze oder eines Drahtbündels oder dergleichen.

Insbesondere ist das Drahtgeflecht als eine Böschungssicherung, als ein Sicherheitszaun, als ein Fangzaun, als ein Steinschlag-Schutznetz, als ein Absperrzaun, als ein Fischfarming-Netz, als ein Raubtier-Schutznetz, als ein Gehegezaun, als eine Tunnelsicherung, als ein Hangmurenschutz, als ein Motorsport-Schutzzaun, als ein Straßenzaun, als eine Lawinensicherung oder dergleichen ausgebildet. Insbesondere aufgrund seiner hohen Festigkeit und/oder Belastbarkeit sind auch Anwendungen als Abdeckung und/oder Umhüllung, beispielsweise von Kraftwerken, Fabrikgebäuden, Wohnhäuser oder anderen Gebäuden, als Explosionsschutz, als Geschossschutz, als Abschirmung gegen fliegende Objekte, als Fangnetz, als Rammschutz oder dergleichen denkbar. Das Drahtgeflecht kann beispielsweise horizontal oder vertikal oder schräg, insbesondere relativ zu einem Untergrund, ausgelegt und/oder angeordnet und/oder montiert sein. Insbesondere ist das Drahtgeflecht flächig ausgebildet. Vorteilhaft ist das Drahtgeflecht regelmäßig und/oder in zumindest eine Richtung periodisch aufgebaut. Bevorzugt ist das Drahtgeflecht einrollbar und/oder ausrollbar, insbesondere um eine Achse, welche parallel zu der Haupterstreckungsrichtung der Wendel verläuft. Insbesondere ist eine aus dem Drahtgeflecht aufgerollte Rolle in eine Richtung senkrecht zu der Haupterstreckungsrichtung der Wendel ausrollbar.

Vorzugsweise ist die Wendel spiralartig ausgebildet. Insbesondere ist die Wendel als eine abgeflachte Spirale ausgebildet. Bevorzugt bilden eine Vielzahl von Biegestellen und eine Vielzahl von Schenkeln die Wendel aus, wobei vorteilhaft Biegestellen jeweils unmittelbar mit Schenkeln verbunden sind. Vorteilhaft ist die Quererstreckung erheblich kleiner als eine Länge des ersten Schenkels. Insbesondere Vorteilhaft weist die Wendel entlang ihres Verlaufs einen zumindest im Wesentlichen konstanten oder einen konstanten Durchmesser und/oder Querschnitt auf. Besonders bevorzugt weist die Wendel eine Vielzahl von Schenkeln auf, welche vorteilhaft zumindest im Wesentlichen identisch oder identisch ausgebildet sind. Vorteilhaft weist die Wendel eine Vielzahl von jeweils zwei benachbarte Schenkel verbindenden Biegestellen auf, welche vorzugsweise zumindest im Wesentlichen identisch oder identisch ausgebildet sind. Bevorzugt ist die Wendel aus einem einzelnen Längselement, insbesondere lediglich aus dem Längselement, ausgebildet, beispielsweise aus dem Draht oder einer Litze oder einem Drahtseil oder einem Drahtbündel oder dergleichen. Unter "zumindest im Wesentlichen identischen" Objekten soll in diesem Zusammenhang insbesondere verstanden werden, dass die Objekte derart konstruiert sind, dass sie jeweils eine gemeinsame Funktion erfüllen können und sich in ihrer Konstruktion abgesehen von Fertigungstoleranzen höchstens durch einzelne Elemente unterscheiden, die für die gemeinsame Funktion unwesentlich sind. Vorzugsweise soll unter "zumindest im Wesentlichen identisch" abgesehen von Fertigungstoleranzen und/oder im Rahmen fertigungstechnischer Möglichkeiten identisch verstanden werden. Unter einem "zumindest im Wesentlichen konstanten Wert" soll in diesem Zusammenhang insbesondere ein Wert verstanden werden, der um höchstens 20 %, vorteilhaft um höchstens 15 %, besonders vorteilhaft um höchstens 10 %, bevorzugt um höchstens 5 %, vorzugsweise um höchstens 3 % und besonders bevorzugt höchstens um 2 % oder sogar höchstens um 1 % variiert. Darunter, dass ein Objekt einen "zumindest im Wesentlichen konstanten Querschnitt" aufweist, soll dabei insbesondere verstanden werden, dass für einen beliebigen ersten Querschnitt des Objekts entlang zumindest einer Richtung und einen beliebigen zweiten Querschnitt des Objekts entlang der Richtung ein minimaler Flächeninhalt einer Differenzfläche, die bei einem Übereinanderlegen der Querschnitte gebildet wird, maximal 20 %, vorteilhaft maximal 10 % und besonders vorteilhaft maximal 5 % des Flächeninhalts des größeren der beiden Querschnitte beträgt.

Vorzugsweise ist die Längsrichtung der Wendel zumindest im Wesentlichen parallel oder parallel zu einer Haupterstreckungsrichtung der Wendel angeordnet. Vorzugsweise weist die Wendel eine Längsachse auf, die parallel zu der Längsrichtung der Wendel verläuft. Vorzugsweise ist die Haupterstreckungsebene der Wendel zumindest im Wesentlichen parallel zu einer Haupterstreckungsebene des Drahtgeflechts angeordnet, zumindest in einem planar ausgelegten und/oder planar ausgerollten Zustand des Drahtgeflechts, welcher sich insbesondere von einem installierten Zustand des Drahtgeflechts unterscheiden kann. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft.

Vorzugsweise weist das Drahtgeflecht eine Mehrzahl oder eine Vielzahl von insbesondere identisch ausgebildeten Wendeln auf. Es ist auch denkbar, dass das Drahtgeflecht aus mehreren unterschiedlichen Wendeln ausgebildet ist. Vorteilhaft sind die Wendeln miteinander verbunden. Insbesondere sind benachbarte Wendeln derart angeordnet, dass ihre Längsrichtungen parallel verlaufen. Vorzugsweise ist jeweils eine Wendel in jeweils zwei ihr benachbarte Wendeln eingeflochten und/oder eingedreht. Insbesondere ist das Drahtgeflecht herstellbar, indem in ein Vorgeflecht eine Wendel eingedreht wird, in diese eingedrehte Wendel eine weitere Wendel eingedreht wird, in diese weitere eingedrehte Wendel wiederum eine Wendel eingedreht wird und so weiter. Vorteilhaft sind benachbarte Wendeln über ihre Biegestellen verbunden. Besonders vorteilhaft sind jeweils zwei Biegestellen unterschiedlicher Wendeln miteinander verbunden, insbesondere ineinander eingehakt. Insbesondere weisen die Wendeln des Drahtgeflechts denselben Drehsinn auf. Vorteilhaft sind jeweils zwei Wendeln miteinander verknotet, insbesondere jeweils an einem ersten ihrer Enden und/oder jeweils an einem den ersten Enden gegenüberliegenden zweiten ihrer Enden.

Vorzugsweise weist das Drahtgeflecht zumindest eine Masche auf. Besonders bevorzugt ist die Masche von vier Schenkeln begrenzt, von denen insbesondere jeweils zwei zu derselben Wendel gehören. Vorteilhaft begrenzt die Wendel die Masche zu wenigstens einer Seite hin, insbesondere zu zwei Seiten hin. Insbesondere ist die Masche viereckig, insbesondere rautenförmig. Vorteilhaft ist die Masche symmetrisch bezüglich einer Symmetrieachse, die parallel zu der Längsrichtung der Wendel verläuft und/oder symmetrisch bezüglich einer Symmetrieachse, die senkrecht zu der Längsrichtung der Wendel verläuft. Vorzugsweise weist die Masche einen ersten Innenwinkel auf. Besonders bevorzugt ist der erste Innenwinkel betragsmäßig doppelt so groß wie der erste Steigungswinkel. Insbesondere setzt sich der erste Innenwinkel zusammen aus zwei Steigungswinkeln benachbarter Wendeln. Vorteilhaft ist die Längsachse der Wendel eine Winkelhalbierende des ersten Winkels. Vorzugsweise weist die Masche einen dem ersten Innenwinkel benachbart angeordneten zweiten Innenwinkel auf. Insbesondere entspricht eine Summe eines halben Betrags des zweiten Innenwinkels und eines Betrags des Steigungswinkels zumindest im Wesentlichen oder genau 90°. Vorteilhaft steht eine Winkelhalbierende des zweiten Innenwinkels senkrecht auf der Längsachse der Wendel. Besonders vorteilhaft weist die Masche einen dritten Innenwinkel auf, der dem ersten Innenwinkel gegenüberliegend angeordnet ist. Insbesondere ist der dritte Innenwinkel betragsmäßig mit dem ersten Innenwinkel identisch. Vorteilhaft weist die Masche einen vierten Innenwinkel auf, der dem zweiten Innenwinkel gegenüberliegend angeordnet ist. Insbesondere ist der vierte Innenwinkel betragsmäßig mit dem zweiten Innenwinkel identisch. Vorteilhaft weist das Drahtgeflecht eine Mehrzahl von insbesondere zumindest im Wesentlichen identischen oder identischen Maschen auf. Besonders vorteilhaft bilden jeweils zwei benachbarte Wendeln mehrere Maschen aus. Vorzugsweise bilden der erste Schenkel und der zweite Schenkel gemeinsam mit einem weiteren ersten Schenkel und einem weiteren zweiten Schenkel einer zu der Wendel benachbart angeordneten weiteren Wendel die Masche aus. Unter "zumindest im Wesentlichen" soll in diesem Zusammenhang insbesondere verstanden werden, dass eine Abweichung von einem vorgegebenen Wert insbesondere weniger als 15 %, vorzugsweise weniger als 10 % und besonders bevorzugt weniger als 5 % des vorgegebenen Werts entspricht.

Vorteilhaft ist der erste Steigungswinkel ein Winkel zwischen einer Längsachse des ersten Schenkels und der Längsachse der Wendel, insbesondere in der Frontalbetrachtung. Besonders vorteilhaft ist der zweite Steigungswinkel ein Winkel zwischen einer Haupterstreckungsrichtung der Biegestelle und der Längsachse der Wendel, insbesondere in der Querbetrachtung.

Insbesondere umfasst der Biegebereich wenigstens 25 %, vorteilhaft wenigstens 50 %, besonders vorteilhaft wenigstens 75 % und vorzugsweise wenigstens 85 % der Biegestelle.

Bevorzugt ist der erste Schenkel einstückig mit der Biegestelle, insbesondere mit dem ersten Übergangsbereich, verbunden. Besonders bevorzugt ist der zweite Schenkel einstückig mit der Biegestelle verbunden. Vorteilhaft ist der erste Übergangsbereich einstückig mit dem Biegebereich verbunden. Besonders bevorzugt ist die Wendel einstückig ausgebildet. Insbesondere unterscheidet sich eine Haupterstreckungsebene der Biegestelle von einer Haupterstreckungsebene des ersten Übergangsbereichs. Es ist aber auch denkbar, dass die Biegestelle und der erste Übergangsbereich eine gemeinsame Haupterstreckungsebene aufweisen. Unter "einstückig" soll insbesondere zumindest stoffschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Ist die Wendel aus einem Längselement mit mehreren Komponenten wie beispielsweise einer Litze und/oder einem Drahtseil und/oder einem Drahtbündel ausgebildet, soll unter "einstückig" in diesem Zusammenhang insbesondere verstanden werden, dass Teildrähte und/oder andere Komponenten des Längselements entlang eines Verlaufs der Wendel unterbrechungsfrei sind. Insbesondere ist die Wendel aus einem einzelnen Längselement oder aus einem einzelnen Längselement-Rohling gefertigt.

Vorzugsweise wird der Draht bei dem Hin- und Herbiegeversuch um zwei gegenüberliegende, identisch ausgebildete Biegezylinder gebogen. Vorteilhaft sind die Biegezylinder dazu vorgesehen, den Hin- und Herbiegeversuch verformungsfrei und/oder beschädigungsfrei durchzuführen.

Vorteilhaft ist das Teststück der Wendel einteilig. Vorzugsweise umfasst das Teststück der Wendel genau vier Biegestellen. Besonders bevorzugt umfasst das Teststück der Wendel genau fünf Schenkel. Insbesondere sind die parallelen Platten dazu vorgesehen, den Pressversuch verformungsfrei und/oder beschädigungsfrei durchzuführen. Insbesondere wird bei dem Pressen eine erste Platte der beiden parallelen Platten entlang der Pressstrecke auf eine zweite Platte der beiden parallelen Platten zubewegt. Insbesondere bewegt sich bei dem Pressen die erste Platte relativ zu der zweiten Platte mit einer Geschwindigkeit von wenigstens 10 $\mu$m s$^{-1}$, vorteilhaft von wenigstens 50 $\mu$m s$^{-1}$, besonders vorteilhaft von wenigstens 100 $\mu$m s$^{-1}$, vorzugsweise von etwa 117 $\mu$m s$^{-1}$. Insbesondere wird das Teststück der Wendel bei dem Pressversuch irreversibel verformt. Unter "zumindest annähernd linear verlaufend" soll in diesem Zusammenhang insbesondere frei von Sprüngen und/oder mit einer zumindest im Wesentlichen konstanten Steigung verlaufend verstanden werden.

Vorteilhaft weist die Vorschubeinheit zumindest ein insbesondere angetriebenes Vorschubelement auf, welches bei dem Vorschieben eine Vorschubkraft auf den Wendelrohling ausübt. Bevorzugt ist das Vorschubelement als eine Vorschubrolle ausgebildet. Besonders vorteilhaft weist die Vorschubeinheit mehrere Vorschubelemente auf, von denen insbesondere wenigstens eines, vorteilhaft einige, besonders vorteilhaft alle, angetrieben sind, zwischen denen der Wendelrohling bei dem Vorschieben durchgeführt ist.

Insbesondere ist die Geometrieeinstelleinheit dazu vorgesehen, eine Krümmung der Biegestelle, insbesondere des Biegebereichs und/oder des ersten Übergangsbereichs, und/oder eine Länge des ersten Schenkels und/oder eine Länge des zweiten Schenkels und/oder die Quererstreckung der Wendel und/oder den ersten Steigungswinkel und/oder den zweiten Steigungswinkel und/oder eine Geometrie der Masche einzustellen. Vorteilhaft ist die Biegevorrichtung dazu vorgesehen, die erfindungsgemäße Wendel herzustellen. Insbesondere ist die Biegevorrichtung dazu vorgesehen, das erfindungsgemäße Drahtgeflecht herzustellen.

Vorteilhaft umfasst die Biegevorrichtung eine Flechteinheit, die zu einem Einflechten der Wendel in ein Vorgeflecht, insbesondere ein Vorgeflecht aus einer Mehrzahl von zu der Wendel zumindest im Wesentlichen identischen oder identischen Wendeln, vorgesehen ist.

Vorzugsweise ist der Biegedorn um eine Längsachse des Biegedorns drehbar gelagert. Insbesondere ist der Biegedorn angetrieben. Vorteilhaft weist die Biegevorrichtung, insbesondere die Biegeeinheit, zumindest eine Antriebseinheit für den Biegedorn auf, welche den Biegedorn um seine Längsachse rotiert. Vorzugsweise weist die Biegevorrichtung, insbesondere die Biegeeinheit, zumindest eine Antriebseinheit für den Biegetisch auf, die dazu vorgesehen ist, den Biegetisch um den Biegedorn umlaufend anzutreiben. Vorzugsweise weist die Biegevorrichtung eine einzige Antriebseinheit auf, die mittels geeigneter Riemen, Räder, Getriebe etc. mit angetriebenen und/oder bewegten Komponenten der Biegevorrichtung verbunden und/oder zu deren Antrieb vorgesehen ist.

In einer weiteren Ausgestaltung der Erfindung wird vorgeschlagen, dass der Draht zumindest teilweise, insbesondere abgesehen von einer Beschichtung vollständig aus hochfestem Stahl gefertigt ist. Vorzugsweise ist der Draht ein hochfester Stahldraht. Beispielsweise kann es sich bei dem hochfesten Stahl um Federstahl und/oder Drahtstahl und/oder einen für Drahtseile geeigneten Stahl handeln. Erfindungsgemäß weist der Draht eine Zugfestigkeit von we-

nigstens 800 N mm$^{-2}$ auf. Vorteilhaft könnte der Draht auch eine Zugfestigkeit von wenigstens 1000 N mm$^{-2}$, besonders vorteilhaft von wenigstens 1200 N mm$^{-2}$, vorzugsweise von wenigstens 1400 N mm$^{-2}$ und besonders bevorzugt von wenigstens 1600 N mm$^{-2}$, insbesondere eine Zugfestigkeit von etwa 1770 N mm$^{-2}$ oder von etwa 1960 N mm$^{-2}$ aufweisen. Es ist auch denkbar, dass der Draht eine noch höhere Zugfestigkeit aufweist, beispielsweise eine Zugfestigkeit von wenigstens 2000 N mm$^{-2}$, oder von wenigstens 2200 N mm$^{-2}$, oder auch von wenigstens 2400 N mm$^{-2}$. Hierdurch kann eine hohe Belastbarkeit, insbesondere eine hohe Zugfestigkeit und/oder eine hohe Steifigkeit quer zum Geflecht erzielt werden. Außerdem können vorteilhafte Biegeeigenschaften erzielt werden.

In einer vorteilhaften Ausgestaltung der Erfindung wird vorgeschlagen, dass der zweite Steigungswinkel um wenigstens 2,5°, bevorzugt um wenigstens 5°, vorteilhaft um wenigstens 10°, besonders vorteilhaft um wenigstens 15°, vorzugsweise um wenigstens 20°, besonders bevorzugt um wenigstens 25° von dem ersten Steigungswinkel abweicht. Hierdurch kann eine Geometrie von Verknüpfungspunkten anwendungsspezifisch optimiert werden.

In einer besonders vorteilhaften Ausgestaltung der Erfindung wird vorgeschlagen, dass der zweite Steigungswinkel einen Wert zwischen 25° und 65°, vorteilhaft zwischen 40° und 50°, aufweist. Insbesondere beträgt der zweite Steigungswinkel wenigstens 25°, vorteilhaft wenigstens 30°, besonders vorteilhaft wenigstens 35° und vorzugsweise wenigstens 40° und/oder höchstens 65°, vorteilhaft höchstens 60°, besonders vorteilhaft höchstens 55° und vorzugsweise höchstens 50°. Insbesondere beträgt der zweite Steigungswinkel zumindest im Wesentlichen, insbesondere genau 45°. Besonders bevorzugt weisen die Biegestellen der Wendel des Geflechts einen zweiten Steigungswinkel von etwa 45° auf. Hierdurch kann eine belastbare und/oder vorteilhaft mit einer anderen Bindestelle verbindbare Geometrie einer Biegestelle erzielt werden.

Zudem wird vorgeschlagen, dass in der Querbetrachtung die Biegestelle, insbesondere der Biegebereich, zumindest abschnittsweise einem zumindest annähernd geraden Verlauf, insbesondere einem geraden Verlauf folgt. Unter "zumindest annähernd gerade" soll in diesem Zusammenhang insbesondere im Rahmen von Fertigungstoleranzen gerade, vorzugsweise linear, verstanden werden. Vorzugsweise folgt in der Querbetrachtung ein Abschnitt der Biegestelle dem zumindest annähernd geraden oder geraden Verlauf, welcher Abschnitt wenigstens 50 %, vorteilhaft wenigstens 75 % und besonders vorteilhaft wenigstens 85 % der Biegestelle umfasst. Voreilhaft ist die Biegestelle in dem Abschnitt, insbesondere in einem Bereich der Biegestelle, in einer Ebene gekrümmt, die parallel zu dem annähernd geraden Verlauf der Biegestelle angeordnet ist. Vorzugsweise verläuft in der Frontalbetrachtung der annähernd gerade Verlauf zumindest im Wesentlichen parallel oder parallel zu der Längsrichtung der Wendel. Hierdurch kann eine Biegestelle mit einer hohen Zugfestigkeit und/oder mit einer hohen Biegesteifigkeit bereitgestellt werden. Ferner kann hierdurch eine im Hinblick auf eine Verknüpfung von Biegestellen unterschiedlicher Wendeln vorteilhafte Geometrie bereitgestellt werden.

Ferner wird vorgeschlagen, dass in der Querbetrachtung die Wendel zumindest abschnittsweise einem stufigen, insbesondere schräg-stufigen Verlauf folgt. Vorzugsweise bilden der erste Schenkel, die Biegestelle und der zweite Schenkel in der Querbetrachtung den stufigen Verlauf aus, wobei die Biegestelle oder zumindest deren annähernd gerader Verlauf mit dem ersten Schenkel und/oder mit dem zweiten Schenkel einen Winkel einschließt, der dem zweiten Steigungswinkel entspricht.

Eine hohe Steifigkeit eines Drahtgeflechts quer zu seiner Fläche kann erzielt werden, wenn der erste Schenkel und/oder der zweite Schenkel erfindungsgemäß zumindest abschnittsweise einem geraden Verlauf folgt. Vorteilhaft bilden der erste Schenkel und der zweite Schenkel gerade Seiten der Masche. Besonders vorteilhaft ist der gesamte erste Schenkel und/oder der gesamte zweite Schenkel gerade ausgebildet. Insbesondere weist der erste Schenkel und/oder der zweite Schenkel eine Länge von wenigstens 1 cm, vorteilhaft von wenigstens 2 cm, besonders vorteilhaft von wenigstens 3 cm, vorzugsweise von wenigstens 5 cm und besonders bevorzugt von wenigstens 7 cm auf. Der erste Schenkel und der zweite Schenkel können aber beliebige andere, insbesondere erheblich größere Längen aufweisen. Beispielsweise kann der erste Schenkel und/oder der zweite Schenkel eine Länge von wenigstens 10 cm oder von wenigstens 15 cm oder von wenigstens 20 cm oder von wenigstens 25 cm oder eine noch größere Länge aufweisen, insbesondere in dem Fall, dass die Wendel aus einer Drahtlitze, einem Drahtseil, einem Drahtbündel oder dergleichen ausgebildet ist.

In einer weiteren Ausgestaltung der Erfindung wird vorgeschlagen, dass der erste Schenkel zumindest abschnittsweise in einer ersten Ebene und der zweite Schenkel zumindest abschnittsweise in einer zu der ersten Ebene parallelen zweiten Ebene verlaufen. Insbesondere verlaufen zumindest zwei benachbarte Schenkel der Wendel in parallelen Ebenen. Vorteilhaft verläuft der erste Schenkel in der Querbetrachtung parallel zu dem zweiten Schenkel. Vorzugsweise verlaufen der erste Schenkel und der weitere erste Schenkel in der ersten Ebene und/oder der zweite Schenkel und der weitere zweite Schenkel in der zweiten Ebene. Vorzugsweise definiert die erste Ebene eine Vorderseite des Drahtgeflechts und/oder die zweite Ebene eine Rückseite des Drahtgeflechts oder umgekehrt. Hierdurch kann ein Drahtgeflecht mit einer doppelflächigen und/oder doppelwandigen Struktur bereitgestellt werden. Vorzugsweise können hierdurch quer zum Geflecht wirkende Kräfte unter minimaler Verformung des Geflechts effektiv aufgenommen werden.

Insbesondere umfasst die weitere Wendel zumindest eine weitere Biegestelle, in deren Bereich sich die Wendel und die weitere Wendel kreuzen. Vorzugsweise ist die erste Biegestelle mit der zweiten Biegestelle verbunden, insbesondere verhakt. Insbesondere verbindet die weitere Biegestelle den weiteren ersten Schenkel und den weiteren zweiten Schenkel. Vorzugsweise verläuft der erste Schenkel zumindest im Wesentlichen parallel oder parallel zu dem weiteren ersten Schenkel. Besonders bevorzugt verläuft der zweite Schenkel zumindest im Wesentlichen parallel oder parallel zu dem weiteren zweiten Schenkel.

In einer vorteilhaften Ausgestaltung der Erfindung wird vorgeschlagen, dass sich die erste Wendel und die zweite Wendel in dem Bereich der weiteren Biegestelle senkrecht kreuzen. Insbesondere beträgt der zweite Steigungswinkel 45° und ein analog definierter weiterer zweiter Steigungswinkel der weiteren Biegestelle ebenfalls 45°. Vorzugsweise kreuzen sich miteinander verhakte Biegestellen des Drahtgeflechts jeweils senkrecht. Hierdurch kann eine hohe Zugfestigkeit einer Verbindung zwischen Biegestellen erzielt werden, insbesondere aufgrund einer direkten Krafteinleitung und/oder Kraftübertragung an Kreuzungspunkten. Ferner kann hierdurch eine Kontaktfläche zwischen verhakten Biegestellen maximiert werden.

Zudem wird vorgeschlagen, dass der zweite Steigungswinkel kleiner als der erste Steigungswinkel ist, insbesondere in dem Fall, dass der erste Steigungswinkel größer ist als 45°. Alternativ wird vorgeschlagen, dass der zweite Steigungswinkel größer als der erste Steigungswinkel ist, insbesondere in dem Fall, dass der erste Steigungswinkel kleiner ist als 45°. Vorzugsweise ist der zweite Steigungswinkel unabhängig von dem ersten Steigungswinkel und wie erwähnt insbesondere vorteilhaft genau 45°. Für den Fall, dass unterschiedlich ausgebildete Biegestellen miteinander verhakt sind, sind die zweiten Steigungswinkel der entsprechenden Biegestellen vorteilhaft derart gewählt, dass sich die Biegestellen senkrecht kreuzen. Hierdurch können belastbare Verknüpfungspunkte unabhängig von einer Maschengeometrie bereitgestellt werden.

Weiterhin wird vorgeschlagen, dass der erste Steigungswinkel größer als 45°, vorteilhaft größer als 50°, besonders vorteilhaft größer als 55° und vorzugsweise größer als 60° ist, sodass insbesondere schmale Maschen entstehen. Insbesondere ist der erste Innenwinkel der Masche insbesondere erheblich größer als der zweite Innenwinkel der Masche. Hierdurch kann eine hohe Zugfestigkeit eines Geflechts, insbesondere senkrecht zu einer Längsrichtung von Geflechtwendeln erzielt werden.

Es ist aber auch denkbar, dass der erste Steigungswinkel kleiner als 45° ist, vorteilhaft kleiner als 40°, besonders vorteilhaft kleiner als 35° und vorzugsweise kleiner als 30°, sodass insbesondere breite Maschen entstehen. Insbesondere ist der erste Innenwinkel der Masche insbesondere erheblich kleiner als der zweite Innenwinkel der Masche. Hierdurch kann eine hohe Zugfestigkeit eines Geflechts, insbesondere parallel zu einer Längsrichtung von Geflechtwendeln erzielt werden. Ferner kann hierdurch ein Drahtgeflecht für einen Böschungsschutz oder dergleichen bereitgestellt werden, das quer zu einem Hang ausrollbar ist, wodurch vorteilhaft eine schnelle Installation für schmale zu sichernde Bereiche ermöglicht wird.

In einer bevorzugten Ausgestaltung der Erfindung wird vorgeschlagen, dass in der Längsbetrachtung die Biegestelle zumindest einen mit dem zweiten Schenkel verbundenen zweiten Übergangsbereich mit einer von der Biegekrümmung verschiedenen zweiten Übergangskrümmung umfasst. Vorteilhaft bilden der erste Übergangsbereich, der zweite Übergangsbereich und der Biegebereich gemeinsam die Biegestelle auf. Insbesondere besteht die Biegestelle aus dem ersten Übergangsbereich, dem zweiten Übergangsbereich und dem Biegebereich. Vorzugsweise ist der zweite Übergangsbereich einteilig mit der Biegestelle verbunden. Besonders bevorzugt ist der zweite Schenkel insbesondere einteilig mit dem zweiten Übergangsbereich verbunden. Vorzugsweise ist die Wendel abgesehen von Knoten und Biegestellen ungekrümmt. Hierdurch kann eine Geometrie einer Wendel bereitgestellt werden, die variabel und bezüglich unterschiedlicher Parameter an eine Anforderung anpassbar ist.

In einer besonders bevorzugten Ausgestaltung der Erfindung wird vorgeschlagen, dass die erste Übergangskrümmung und die zweite Übergangskrümmung identisch sind. Vorteilhaft umfassen der erste Übergangsbereich und der zweite Übergangsbereich einen identischen Anteil der Biegestelle. Hierdurch kann vorzugsweise ein Drahtgeflecht bereitgestellt werden, dessen Vorderseite und Rückseite austauschbar eingesetzt werden können.

Ferner wird vorgeschlagen, dass in der Längsbetrachtung der erste Übergangsbereich und der zweite Übergangsbereich spiegelsymmetrisch ausgebildet sind, vorteilhaft bezüglich einer Symmetrieebene, in welcher die Winkelhalbierende des zweiten Innenwinkels der Masche verläuft und/oder welche parallel zu der Längsrichtung der Wendel angeordnet ist. Vorzugsweise ist besagte Symmetrieebene eine Haupterstreckungsebene des Drahtgeflechts und/oder der Wendel. Bevorzugt ist die Biegestelle in der Längsbetrachtung spiegelsymmetrisch, insbesondere bezüglich besagter Symmetrieebene. Hierdurch können vorteilhafte mechanische Eigenschaften einer Biegestelle erzielt werden.

Außerdem wird vorgeschlagen, dass die Biegekrümmung größer ist als die erste Übergangskrümmung und/oder als die zweite Übergangskrümmung. Es ist denkbar, dass die erste Übergangskrümmung und/oder die zweite Übergangskrümmung zumindest im Wesentlichen konstant ist. Bevorzugt läuft die Biegestelle in dem ersten Übergangsbereich und/oder in dem zweiten Übergangsbereich in Richtung des ersten Schenkels und/oder in Richtung des zweiten Schenkels aus. Vorteilhaft bilden der erste Schenkel, die Biegestelle und der zweite Schenkel einen V-förmigen Abschnitt der Wendel aus, wobei die Biegestelle insbesondere eine abgerundete Spitze des Abschnitts ausbildet. Hierdurch können vorteilhaft Spannungen im Material aufgrund abrupter Geometrieänderungen insbesondere weitgehend vermieden oder zumindest reduziert werden.

Eine hohe Härte in Frontalrichtung und/oder eine hohe Belastbarkeit von Verknüpfungspunkten eines Geflechts kann erzielt werden, wenn der Biegebereich, insbesondere der gesamte Biegebereich, einem kreisbogenförmigen Verlauf folgt, insbesondere in der Längsbetrachtung. Vorteilhaft entspricht ein Krümmungsradius des Biegebereichs zumindest im Wesentlichen einer Summe eines Radius des Längselements beziehungsweise des Drahts und eines Radius des Biegedorns.

Insbesondere ist für den Hin- und Herbiegeversuch C ein Faktor von genau $400 \, N^{0,5} \, mm^{0,5}$. Es ist auch denkbar, dass ein größeres C gewählt wird, insbesondere, um eine höhere Belastbarkeit einer Wendel zu erzielen. Beispielsweise kann C ein Faktor von wenigstens $500 \, N^{0,5} \, mm^{0,5}$ oder von wenigstens $750 \, N^{0,5} \, mm^{0,5}$ oder von wenigstens $1000 \, N^{0,5} \, mm^{0,5}$ oder von wenigstens $1500 \, N^{0,5} \, mm^{0,5}$ oder auch noch größer sein. Insbesondere kann der Faktor anwendungsabhängig gewählt werden, wobei ein größerer Faktor zu einer Selektion eines bei einem Verbiegen weniger leicht brechenden Drahts und entsprechend insbesondere zu einem Drahtgeflecht mit einer höheren beschädigungsfreien Verformbarkeit führt.

Ferner wird ein Verfahren zur Herstellung eines erfindungsgemäßen Drahtgeflechts, insbesondere eines Sicherheitsnetzes, mit mehreren ineinander geflochtenen Wendeln beschrieben, wobei ein zur Herstellung geeigneter Draht, insbesondere aus einem hochfesten Stahl, zumindest mittels des Verfahrens zur Identifikation eines geeigneten Drahts identifiziert wird und wobei wenigstens eine Wendel aus zumindest einem Einzeldraht, einem Drahtbündel, einer Drahtlitze, einem Drahtseil und/oder einem anderen Längselement mit dem identifizierten Draht mittels Biegen gefertigt wird. Hierdurch können vorteilhaft zeitaufwändige Testläufe weitgehend vermieden werden. Ferner kann hierdurch ein Drahtgeflecht mit einer hohen Qualität gefertigt werden.

Es wird außerdem vorgeschlagen, dass sich die erste Teilkennlinie über einen Pressstrecken-Wertebereich erstreckt, der wenigstens einem Viertel, vorteilhaft wenigstens einem Drittel, besonders vorteilhaft wenigstens der Hälfte der Quererstreckung der Wendel entspricht. Insbesondere entspricht eine Quererstreckung des Teststücks der Wendel einer Quererstreckung der Wendel. Hierdurch kann vorteilhaft ein Drahtgeflecht bereitgestellt werden, welches bei einem Einschlag wirkende Kräfte über einen großen Bereich teilweise federnd und/oder beschädigungsfrei aufnehmen kann.

In einer vorteilhaften Ausgestaltung der Erfindung wird vorgeschlagen, dass sich an die erste Teilkennlinie eine annähernd linear verlaufende zweite Teilkennlinie mit einer zweiten Steigung, die größer ist als die erste Steigung, insbesondere unmittelbar anschließt. Insbesondere ist die zweite Steigung wenigstens 1,2-mal, vorteilhaft wenigstens 1,5-mal, besonders vorteilhaft wenigstens zweimal und vorzugsweise wenigstens dreimal so groß wie die erste Steigung. Insbesondere ist die zweite Steigung höchstens zehnmal, vorteilhaft höchstens achtmal, besonders vorteilhaft höchstens sechsmal und vorzugsweise höchstens fünfmal so groß wie die erste Steigung. Hierdurch können in einem Belastungsfall auftretende Kraftspitzen vorteilhaft von einem Drahtgeflecht aufgenommen werden.

Eine adaptive Kraftaufnahme und/oder Energieaufnahme eines Drahtgeflechts kann erzielt werden, wenn die zweite Steigung höchstens viermal so groß ist wie die erste Steigung. Insbesondere können hierdurch Beschädigungen durch abrupt abgebremste eingeschlagene Gegenstände vermieden werden, da ein Abbremsen in wenigstens zwei Stufen erfolgt.

Außerdem wird vorgeschlagen, dass die Federkennlinie in einem Übergangsbereich zwischen der ersten Teilkennlinie und der zweiten Teilkennlinie einen Knick aufweist, wodurch insbesondere ein spontanes Ansprechen in einem Einschlagsfall erzielt werden kann. Unter einem "Knick" soll in diesem Zusammenhang insbesondere eine spontane, insbesondere sprungartige oder sprunghafte Veränderung einer Steigung verstanden werden. Insbesondere erstreckt sich der Übergangsbereich über einen Pressstrecken-Wertebereich, der höchstens 5 %, vorteilhaft höchstens 3 %, besonders vorteilhaft höchstens 2 % und vorzugsweise höchstens 1 % der Quererstreckung der Wendel entspricht.

Zudem wird vorgeschlagen, dass sich die zweite Teilkennlinie über einen Pressstrecken-Wertebereich erstreckt, der wenigstens einem Fünftel, vorteilhaft wenigstens einem Viertel, besonders vorteilhaft wenigstens einem Drittel der Quererstreckung der Wendel entspricht. Vorzugsweise erstreckt sich die zweite Teilkennlinie über einen Pressstrecken-Wertebereich, der kleiner ist als ein entsprechender Pressstrecken-Wertebereich der ersten Teilkennlinie. Hierdurch können in einem zweiten Kraftaufnahmebereich eines Drahtgeflechts große Kräfte unter einer vergleichsweise kleineren Verformung als in einem ersten Kraftaufnahmebereich des Drahtgeflechts kontrolliert absorbiert werden.

In einer bevorzugten Ausgestaltung der Erfindung wird vorgeschlagen, dass sich an die zweite Teilkennlinie eine konvex gekrümmte dritte Teilkennlinie anschließt. Insbesondere weist die dritte Teilkennlinie eine mit zunehmender Pressstrecke sich insbesondere stetig, insbesondere konstant vergrößernde Steigung auf. Es ist denkbar, dass die dritte Teilkennlinie einem polynomischen, insbesondere einem parabolischen, oder auch einem exponentiellen Verlauf folgt. Insbesondere erstreckt sich die dritte Teilkennlinie über einen Pressstrecken-Wertebereich, der wenigstens einem Zehntel, vorteilhaft wenigstens einem Achtel, besonders vorteilhaft wenigstens einem Sechstel und vorzugsweise wenigstens einem Viertel der Quererstreckung der Wendel entspricht. Vorzugsweise erstreckt sich die dritte Teilkennlinie über einen Pressstrecken-Wertebereich, der kleiner ist als ein entsprechender Pressstrecken-Wertebereich der zweiten Teilkennlinie. Hierdurch können Extremkräfte sicher aufgenommen werden, insbesondere durch eine kontrollierte Verformung eines Drahtgeflechts beziehungsweise dessen Wendeln.

Weiterhin wird vorgeschlagen, dass ein Übergang zwischen der zweiten Teilkennlinie und der dritten Teilkennlinie frei von einem Knick ist. Insbesondere geht die Steigung der zweiten Teilkennlinie stetig in die Steigung der dritten Teilkennlinie über. Vorzugsweise setzt sich die Federkennlinie zusammen aus der ersten Teilkennlinie, der daran insbesondere unmittelbar anschließenden zweiten Teilkennlinie und der daran insbesondere unmittelbar anschließenden dritten Teilkennlinie. Hierdurch kann vorteilhaft eine abrupt auftretende Beschädigung eines Drahtgeflechts, beispielsweise bei einem Einschlag, vermieden werden.

Grundsätzlich ist denkbar, dass sich an die erste Teilkennlinie unmittelbar eine Teilkennlinie anschließt, die bezüglich ihres Verlaufs in etwa oder genau der dritten Teilkennlinie entspricht. Insbesondere ist denkbar, dass die Federkennlinie frei von einer zweiten linearen Teilkennlinie ist.

Es wird zudem vorgeschlagen, dass die Geometrieeinstelleinheit eine Querhubeinheit aufweist, die dazu vorgesehen ist, eine relative Position des Biegetischs entlang einer Haupterstreckungsrichtung in eine Querhubrichtung des Biegedorns relativ zu der Vorschubachse periodisch und/oder zu einem Umlaufen des Biegetischs um den Biegedorn synchronisiert zu verändern, insbesondere während einer Fertigung der Wendel. Insbesondere weist die Querhubeinheit zumindest ein Zuführelement auf, welches dem Biegetisch den Wendelrohling zuführt. Insbesondere ist das Zuführelement relativ zu dem Biegetisch in die Querhubrichtung verschiebbar gelagert. Vorteilhaft weist die Querhubeinheit zumindest ein Kopplungselement auf, welches eine Bewegung des Zuführelements an das Umlaufen des Biegetischs um den Biegedorn insbesondere mechanisch koppelt. Vorzugsweise befindet sich der Biegetisch zu Beginn des Biegens und/oder nach dem Vorschieben des Wendelrohlings in einer Ausgangsposition des Biegetischs. Besonders bevorzugt befindet sich das Zuführelement zu Beginn des Biegens und/oder nach dem Vorschieben des Wendelrohlings in einer Ausgangsposition des Zuführelements. Insbesondere befinden sich der Biegetisch und das Zuführelement während eines Umlaufs des Biegetischs um den Biegedorn wenigstens einmal gleichzeitig in ihrer jeweiligen Ausgangsposition. Vorteilhaft wird während eines Umlaufs des Biegetischs um den Biegedorn das Zuführelement aus der Ausgangsposition parallel zu der Querhubrichtung weg von dem Biegetisch ausgelenkt. Besonders vorteilhaft wird das Zuführelement während dieses Umlaufs des Biegetischs anschließend in seine Ausgangsposition zurückbewegt. Insbesondere ist die Querhubeinheit dazu vorgesehen, eine bei dem Biegen entstehende Biegestelle mit dem zweiten Steigungswinkel zu versehen. Insbesondere ist die Querhubeinheit dazu vorgesehen, einen einstellbaren Querhub zu erzeugen. Hierdurch kann vorteilhaft eine Geometrie einer Biegestelle mittels Anpassung eines Querhubs präzise eingestellt werden.

In einer vorteilhaften Ausgestaltung der Erfindung wird vorgeschlagen, dass die Geometrieeinstelleinheit eine Anschlagseinheit mit zumindest einem Anschlagelement aufweist, das eine maximale Vorschubposition für den Wendelrohling definiert. Insbesondere ist die Anschlagseinheit dazu vorgesehen, die Länge des ersten Schenkels und/oder die Länge des zweiten Schenkels einzustellen. Vorteilhaft schiebt die Vorschubeinheit bei dem Vorschieben den Wendelrohling, insbesondere eine jeweils zuletzt gebogene Biegestelle, bis zu dem Anschlagelement vor. Insbesondere liegt in einem vorgeschobenen Zustand der Wendelrohling, insbesondere die jeweils zuletzt gebogene Biegestelle, an dem Anschlagelement an. Vorzugsweise wird der Wendelrohling vor dem Biegen bis zu der maximalen Vorschubposition vorgeschoben. Hierdurch kann vorteilhaft eine Wendelgeometrie, insbesondere eine Schenkellänge, präzise und/oder einfach und/oder zuverlässig eingestellt werden.

In einer besonders vorteilhaften Ausgestaltung der Erfindung wird vorgeschlagen, dass das Anschlagelement vollständig um den Biegedorn, insbesondere auf einer Kreisbahn, umlaufend gelagert ist. Vorzugsweise sind eine Bewegung des Biegetischs und eine Bewegung des Anschlagelements um den Biegedorn synchronisiert, insbesondere während der Fertigung der Wendel. Hierdurch kann bei einem hohen Fertigungstempo ein präziser Vorschub ermöglicht werden.

Zudem wird vorgeschlagen, dass eine Position des Biegetischs relativ zu dem Anschlagelement bei einem Umlaufen des Biegetischs veränderlich ist. Vorteilhaft eilt das Anschlagelement dem Biegetisch während des Vorschiebens und/oder vor dem Biegen voraus. Insbesondere befindet sich während eines Umlaufs des Biegetischs um den Biegedorn der Wendelrohling bereits in der maximalen Vorschubposition, ehe sich der Biegetisch in seiner Ausgangsposition befindet. Vorteilhaft liegt das Anschlagelement während des Biegens an dem Biegetisch an. Besonders vorteilhaft ist eine Position des Anschlagelements relativ zu dem Biegetisch bei dem Biegen konstant. Hierdurch kann ein Bewegungsablauf erzielt werden, der eine hohe Präzision und/oder ein hohes Tempo einer Fertigung ermöglicht.

Eine genaue Positionierung eines Rohlings vor einem Biegen kann erzielt werden, wenn das Anschlagelement eine konkav, insbesondere kreisbogenförmig gekrümmte Anschlagsfläche aufweist. Insbesondere ist die Anschlagsfläche in zwei vorteilhaft senkrecht zueinander verlaufende Richtungen konkav, insbesondere kreisbogenförmig, gekrümmt. Vorzugsweise ist ein Abstand zwischen der Anschlagsfläche und dem Biegedorn bei einem Umlaufen des Anschlagselements um den Biegedorn konstant. Vorzugsweise ist die Anschlagsfläche als eine Oberfläche einer Nut ausgebildet. Vorteilhaft ist die Nut in Umfangsrichtung um den Biegedorn gekrümmt. Besonders vorteilhaft ist die Anschlagsfläche in eine Richtung senkrecht zu einer Längsrichtung der Nut konkav gekrümmt. Insbesondere entspricht eine Krümmung der Anschlagsfläche in etwa einer Krümmung der Biegestelle in der Längsbetrachtung. Insbesondere ist die Nut dazu vorgesehen, den Wendelrohling und/oder die zuletzt gebogene Biegestelle zu zentrieren, insbesondere gegen Ende des Vorschiebens und/oder in der maximalen Vorschubposition des Wendelrohlings.

Es wird ferner vorgeschlagen, dass in zumindest einem Vorschubbetriebszustand, in welchem ein Vorschub des Wendelrohlings erfolgt, eine Position des Anschlagelements relativ zu der Vorschubachse und insbesondere relativ zu dem Biegedorn veränderlich ist. Insbesondere läuft das Anschlagelement in dem Vorschubbetriebszustand insbesondere mit einer konstanten Winkelgeschwindigkeit um den Biegedorn um. Hierdurch kann ein präziser Anschlag für einen Rohling mittels eines bewegten, insbesondere mittels eines rotierenden Bauteils bereitgestellt werden.

In einer bevorzugten Ausgestaltung der Erfindung wird vorgeschlagen, dass der Biegetisch um eine Schwenkachse schwenkbar gelagert ist, welche bei einem Umlaufen des Biegetischs um den Biegedorn selbst den Biegedorn umläuft. Vorteilhaft ist die Schwenkachse parallel zu der Längsachse des Biegedorns angeordnet. Besonders vorteilhaft wird der Biegetisch nach dem Biegen um die Schwenkachse geschwenkt. Insbesondere führt der Biegetisch bei einem Schwenken um die Schwenkachse eine Ausweichbewegung aus, aufgrund derer der Biegetisch bei seinem Umlaufen um den Biegedorn unter dem Wendelrohling hindurchführbar ist. Insbesondere ist der Biegetisch während eines Teils seines Umlaufs um den Biegedorn in einer verschwenkten Position. Hierdurch kann vorteilhaft ein kontinuierlich umlaufender Biegetisch bereitgestellt werden, der eine schnelle und präzise Fertigung ermöglicht.

In einer besonders bevorzugten Ausgestaltung der Erfindung wird vorgeschlagen, dass die Biegeeinheit zu einem Biegen eines Wendelrohlings mit zumindest einem Draht aus einem hochfesten Stahl vorgesehen ist.

In sich gerade und/oder in sich nicht verdrehte Wendeln können vorteilhaft gefertigt werden, wenn die Biegeeinheit dazu vorgesehen ist, den Wendelrohling bei einem Umlauf des Biegetischs um mehr als 180° zu biegen. Insbesondere ist die Biegeeinheit dazu vorgesehen, den Wendelrohling bei dem Biegen zu überbiegen und/oder zu überdrücken, was insbesondere im Fall von Längselementen mit einem hochfesten Draht nötig sein kann, insbesondere aufgrund eines teilweise federnden Verhaltens und/oder eines Rückfederns derartiger Längselemente. Vorteilhaft ist die Biegeeinheit dazu vorgesehen, Biegestellen zu erzeugen, die um 180° gebogen sind. Vorteilhaft wird der Biegetisch nach einem Biegen um einen entsprechenden Winkel, der größer als 180° ist, verschwenkt. Besonders vorteilhaft ist die Biegeeinheit dazu vorgesehen, einen Überbiegewinkel einzustellen. Insbesondere drückt der Biegetisch während des Biegens gegen den Wendelrohling, vorteilhaft während der Biegetisch bei dessen Umlaufen um den Biegedorn einen Winkelbereich überstreicht, der um einen Überbiegewinkel größer ist als 180°. Insbesondere kann ein Überbiegewinkel beispielsweise bis zu 1° oder bis zu 2° oder bis zu 5° oder bis zu 10° oder bis zu 15° oder bis zu 20° oder bis zu 30° oder noch mehr betragen, insbesondere in Abhängigkeit von Federeigenschaften des Wendelrohlings. Auch ist denkbar, dass der Überbiegewinkel mittels eines Justierens der Biegeeinheit einstellbar ist.

Ein ungewolltes nachträgliches Verbiegen kann vermieden und/oder eine hohe Präzision einer Fertigung kann erzielt werden, wenn die Geometrieeinstelleinheit eine Halteeinheit mit zumindest einem Halteelement aufweist, das die Wendel bei dem Biegen und insbesondere auch bei dem Überbiegen vom Biegedorn aus betrachtet hinter dem Biegetisch zumindest teilweise fixiert. Insbesondere schränkt das Halteelement eine Bewegbarkeit und/oder Verbiegbarkeit der Wendel in zumindest eine Richtung, insbesondere in Richtung eines Halbraums, ein. Vorteilhaft hält das Halteelement die Wendel in einem Bereich eines Schenkels, der an die zuletzt gebogene Biegestelle angrenzt. Insbesondere umgreift das Halteelement die Wendel teilweise, insbesondere in eine Richtung auf eine Haupterstreckungsebene des Führungstischs zu. Vorteilhaft ist das Halteelement gabelartig ausgebildet. Insbesondere schwenkt der Biegetisch bei einem Biegen des Wendelrohlings um den Biegedorn die gesamte bereits gebogene Wendel um eine Achse parallel zu der Längsachse der Wendel, wobei das Halteelement vorteilhaft die Wendel bei diesem Schwenken stabilisiert.

Ein kontinuierliches Abstützen einer Wendel während deren Biegens kann erzielt werden, wenn das Halteelement vollständig um den Biegedorn umlaufend gelagert ist. Insbesondere läuft das Halteelement synchronisiert zu dem Umlaufen des Biegetischs um den Biegedorn um, insbesondere während der Fertigung der Wendel.

In einer weiteren Ausgestaltung der Erfindung wird vorgeschlagen, dass das Halteelement um eine Schwenkachse schwenkbar gelagert ist, welche bei einem Umlaufen des Halteelements um den Biegedorn selbst den Biegedorn umläuft. Insbesondere liegt das Halteelement lediglich während eines Teils eines Umlaufens des Halteelements um den Biegedorn an der Wendel an. Vorteilhaft schwenkt das Halteelement während seines Umlaufens um den Biegedorn um die Schwenkachse des Halteelements aus und entfernt sich dabei von der Wendel. Besonders vorteilhaft ist das Halteelement während des Vorschiebens berührungsfrei zu der Wendel und dem Wendelrohling angeordnet. Insbesondere Hierdurch kann eine hohe Fertigungsgeschwindigkeit erzielt werden. Ferner kann hierdurch in zeiteffizienter und/oder energieeffizienter Weise auf ein Abbremsen bewegter Komponenten bei einer Fertigung größtenteils verzichtet werden.

In einer bevorzugten Ausgestaltung der Erfindung wird vorgeschlagen, dass das Halteelement an dem Biegetisch gelagert ist. Insbesondere verlaufen die Schwenkachse des Biegetischs und die Schwenkachse des Halteelements parallel und vorzugsweise parallel zu der Längsachse des Biegedorns. Insbesondere verläuft die Schwenkachse des Halteelements in dem Führungstisch und/oder in dessen Aufhängung. Vorzugsweise weist die Geometrieeinstelleinheit zumindest eine Führungskulisse für den Führungstisch auf. Besonders bevorzugt weist die Geometrieeinstelleinheit zumindest eine insbesondere weitere Führungskulisse für das Halteelement auf. Vorteilhaft laufen der Führungstisch und das Halteelement während der Fertigung der Wendel synchron um den Biegedorn um und werden zu unterschiedlichen Zeitpunkten relativ zu dem Wendelrohling verschwenkt.

Ferner wird ein Verfahren zur Herstellung eines Drahtgeflechts, insbesondere eines Sicherheitsnetzes, welches mehrere ineinander geflochtene Wendeln aufweist, von denen wenigstens eine Wendel aus zumindest einem Wendelrohling, nämlich einem Einzeldraht, einem Drahtbündel, einer Drahtlitze, einem Drahtseil und/oder einem anderen Längselement, mit zumindest einem Draht mittels zumindest einer Biegevorrichtung gefertigt wird, beschrieben. Hierdurch können insbesondere ein hohes Fertigungstempo und eine hohe Fertigungspräzision erzielt werden.

Ein erfindungsgemäßes Drahtgeflecht und ein erfindungsgemäßes Verfahren sollen hierbei nicht auf die oben beschriebenen Anwendungen und Ausführungsformen beschränkt sein. Insbesondere können ein erfindungsgemäßes Drahtgeflecht und ein erfindungsgemäßes Verfahren zu einer Erfüllung einer hierin beschriebenen Funktionsweise eine von einer hierin genannten Anzahl von einzelnen Elementen und/oder Bauteilen und/oder Einheiten und/oder Verfahrensschritten abweichende Anzahl aufweisen.

## Zeichnungen

Weitere Vorteile ergeben sich aus der folgenden Zeichnungsbeschreibung. In den Zeichnungen sind unterschiedliche Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1     einen Teil eines Drahtgeflechts in einer schematischen Frontansicht,
Fig. 2     einen Teil einer Wendel des Drahtgeflechts in einer perspektivischen Darstellung,
Fig. 3     einen weiteren Teil des Drahtgeflechts in einer schematischen Frontansicht,
Fig. 4     zwei Schenkel sowie eine Biegestelle der Wendel in unterschiedlichen Ansichten,
Fig. 5     zwei miteinander verbundene Biegestellen zweier Wendel in unterschiedlichen Ansichten,
Fig. 6     die Wendel, betrachtet in einer Längsrichtung der Wendel, in einer schematischen Darstellung,
Fig. 7     eine Biegetestvorrichtung zur Durchführung eines Hin- und Herbiegeversuchs in einer schematischen Darstellung,
Fig. 8     eine Pressvorrichtung zur Durchführung eines Pressversuchs in einer schematischen Darstellung,
Fig. 9     eine Federkennlinie eines Teststücks der Wendel in einem schematischen Diagramm,
Fig. 10    eine Biegevorrichtung zur Herstellung eines Drahtgeflechts in einer perspektivischen Darstellung,
Fig. 11    einen Biegeraum der Biegevorrichtung in einem ersten Betriebszustand in einer perspektivischen Darstellung,
Fig. 12    den Biegeraum in einem zweiten Betriebszustand in einer perspektivischen Darstellung,
Fig. 13    Führungskulissen eines Biegetischs und eines Halteelements der Biegevorrichtung in einer schematischen Seitenansicht,
Fig. 14    ein schematisches Ablaufdiagramm eines Verfahrens zur Herstellung des Drahtgeflechts,
Fig. 15    ein zweites Drahtgeflecht in einer schematischen Frontansicht,
Fig. 16    eine Biegestelle einer Wendel des zweiten Drahtgeflechts in einer schematischen Darstellung,
Fig. 17    ein drittes Drahtgeflecht in einer schematischen Frontansicht,
Fig. 18    eine Biegestelle einer Wendel des dritten Drahtgeflecht in einer schematischen Darstellung,
Fig. 19    eine von der Erfindung abweichende Wendel eines vierten Drahtgeflechts, betrachtet in eine Längsrichtung der Wendel, in einer schematischen Darstellung,
Fig. 20    eine von der Erfindung abweichende Wendel eines fünften Drahtgeflechts, betrachtet in eine Längsrichtung der Wendel, in einer schematischen Darstellung,
Fig. 21    eine Federkennlinie eines Teststücks einer Wendel eines sechsten Drahtgeflechts in einem schematischen Diagramm,
Fig. 22    eine Federkennlinie eines Teststücks einer Wendel eines siebten Drahtgeflechts in einem schematischen Diagramm,
Fig. 23    eine Federkennlinie eines Teststücks einer Wendel eines achten Drahtgeflechts in einem schematischen Diagramm,
Fig. 24    eine Federkennlinie eines Teststücks einer Wendel eines neunten Drahtgeflechts in einem schematischen Diagramm und
Fig. 25    eine Federkennlinie eines Teststücks einer Wendel eines zehnten Drahtgeflechts in einem schematischen Diagramm.

## Beschreibung der Ausführungsbeispiele

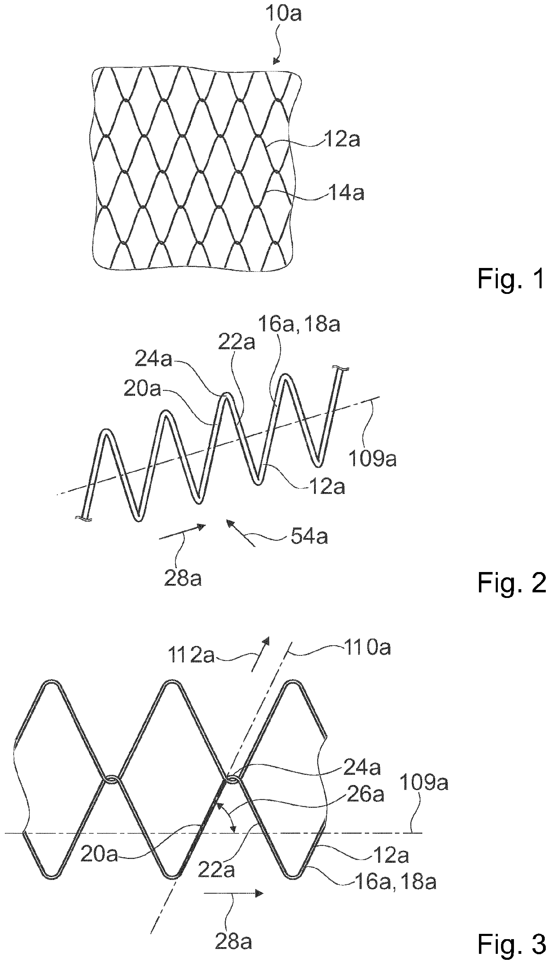

Die Figur 1 zeigt einen Teil eines Drahtgeflechts 10a in einer schematischen Frontansicht. Das Drahtgeflecht 10a ist als ein Sicherheitsnetz ausgebildet. Das gezeigte Drahtgeflecht 10a kann beispielsweise als Böschungssicherung, Lawinen-Schutznetz, Fangzaun oder dergleichen eingesetzt werden. Das Drahtgeflecht 10a weist mehrere ineinander geflochtene Wendeln 12a, 14a auf, insbesondere eine Wendel 12a und eine weitere Wendel 14a. Im vorliegenden Fall weist das Drahtgeflecht 10a eine Vielzahl identisch ausgebildeter Wendeln 12a, 14a auf, die ineinander eingedreht sind und das Drahtgeflecht 10a ausbilden.

Die Figur 2 zeigt einen Teil der Wendel 12a des Drahtgeflechts 10a in einer perspektivischen Darstellung. Die Figur 3 zeigt einen weiteren Teil des Drahtgeflechts 10a in einer schematischen Frontansicht. Die Wendel 12a ist aus einem Längselement 16a mit zumindest einem Draht 18a gefertigt. Im vorliegenden Fall ist das Längselement 16a als ein Einzeldraht ausgebildet. Der Draht 18a bildet im vorliegenden Fall das Längselement 16a. Das Längselement 16a ist zu der Wendel 12a gebogen. Die Wendel 12a ist einteilig ausgebildet. Die Wendel 12a ist aus einem einzelnen Drahtstück gefertigt. Im vorliegenden Fall weist der Draht 18a einen Durchmesser d von 3 mm auf. Es ist auch denkbar, dass ein Längselement als ein Drahtbündel, eine Drahtlitze, ein Drahtseil oder dergleichen ausgebildet ist. Ferner ist denkbar, dass ein Draht einen anderen Durchmesser, wie beispielsweise weniger als 1 mm oder etwa 1 mm oder etwa 2 mm oder etwa 4 mm oder etwa 5 mm oder etwa 6 mm oder einen noch größeren Durchmesser aufweist.

Die Wendel 12a weist einen ersten Schenkel 20a, einen zweiten Schenkel 22a sowie eine den ersten Schenkel 20a und den zweiten Schenkel 22a verbindende Biegestelle 24a auf. Im vorliegenden Fall weist die Wendel 12a eine Vielzahl von ersten Schenkeln 20a, eine Vielzahl von zweiten Schenkeln 22a sowie eine Vielzahl von Biegestellen 24a auf, die aus Gründen einer Übersichtlichkeit nicht alle mit Bezugszeichen versehen sind. Ferner sind im vorliegenden Fall die ersten Schenkel 20a zumindest im Wesentlichen identisch zueinander ausgebildet. Außerdem sind im vorliegenden Fall die zweiten Schenkel 22a zumindest im Wesentlichen identisch zueinander ausgebildet. Zudem sind im vorliegenden Fall die Biegestellen 24a zumindest im Wesentlichen identisch zueinander ausgebildet. Im Folgenden sind daher exemplarisch der erste Schenkel 20a, der zweite Schenkel 22a und die Biegestelle 24a detaillierter beschrieben. Selbstverständlich ist denkbar, dass ein Drahtgeflecht unterschiedliche erste Schenkel und/oder unterschiedliche zweite Schenkel und/oder unterschiedliche Biegestellen aufweist. Die Wendel 12a weist eine Längsrichtung 28a auf. Die Wendel 12a weist eine Längsachse 109a auf, die parallel zu der Längsrichtung 28a verläuft. Die Längsrichtung 28a entspricht einer Haupterstreckungsrichtung der Wendel 12a. In einer Frontalbetrachtung senkrecht zu einer Haupterstreckungsebene der Wendel 12a verläuft der erste Schenkel 20a mit einem ersten Steigungswinkel 26a bezüglich der Längsrichtung 28a der Wendel 12a. Insbesondere ist die Frontalbetrachtung eine Betrachtung in Frontalrichtung 54a. Der erste Schenkel 20a weist eine Längsachse 110a auf. Die Längsachse 110a des ersten Schenkels 20a verläuft parallel zu einer Haupterstreckungsrichtung 112a des ersten Schenkels 20a. In der Figur 3 ist die Wendel 12a in der Frontalbetrachtung dargestellt. Die Längsachse 109a der Wendel 12a und die Längsachse 110a des ersten Schenkels 20a schließen den ersten Steigungswinkel 26a ein. Der erste Schenkel 20a weist im vorliegenden Fall eine Länge von etwa 65 mm auf. Der zweite Schenkel 22a weist im vorliegenden Fall eine Länge von etwa 65 mm auf.

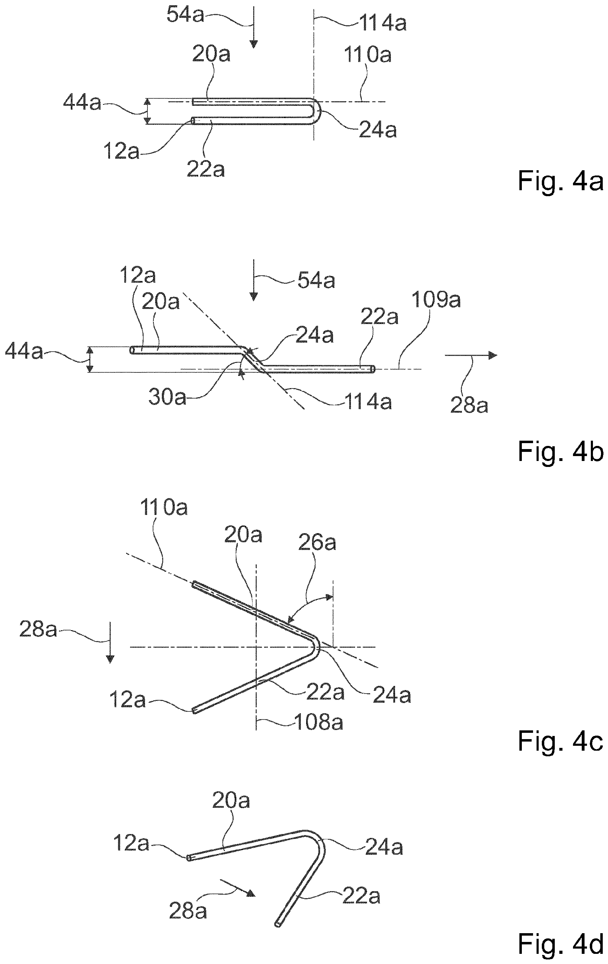

Die Figur 4 zeigt einen Teil der Wendel 12a, der den ersten Schenkel 20a, den zweiten Schenkel 22a sowie die Biegestelle 24a umfasst, in unterschiedlichen Ansichten. Figur 4a zeigt eine Betrachtung in Längsrichtung 28a der Wendel 12a. Figur 4b zeigt den ersten Schenkel 20a, den zweiten Schenkel 22a und die Biegestelle 24a in einer Querbetrachtung senkrecht zu der Längsrichtung 28a der Wendel 12a und in der Haupterstreckungsebene der Wendel 12a. Figur 4c zeigt eine Betrachtung in Frontalrichtung 54a. Figur 4d zeigt eine perspektivische Betrachtung. In der Querbetrachtung verläuft die Biegestelle 24a zumindest abschnittsweise mit einem von dem ersten Steigungswinkel 26a verschiedenen zweiten Steigungswinkel 30a bezüglich der Längsrichtung 28a der Wendel 12a. In der Querbetrachtung weist die Biegestelle 24a eine Längsachse 114a auf. Die Längsachse 114a der Biegestelle 24a und die Längsachse 109a der Wendel 12a schließen den zweiten Steigungswinkel 30a ein.

Der Draht 18a ist zumindest teilweise aus einem hochfesten Stahl gefertigt. Der Draht 18a ist als ein hochfester Stahldraht ausgebildet. Der Draht 18a weist eine Zugfestigkeit R von wenigstens 800 N mm$^{-2}$ auf. Im vorliegenden Fall weist der Draht 18a eine Zugfestigkeit R von etwa 1770 N mm$^{-2}$ auf. Selbstverständlich sind, wie oben erwähnt, jedoch auch andere Zugfestigkeiten denkbar, insbesondere auch Zugfestigkeiten von mehr als 2200 N mm$^{-2}$. Insbesondere ist denkbar, dass ein Draht aus höchstfestem Stahl gefertigt ist.

Der zweite Steigungswinkel 30a weicht um wenigstens 5° von dem ersten Steigungswinkel 26a ab. Der zweite Steigungswinkel 30a weist einen Wert zwischen 25° und 65° auf. Ferner ist der erste Steigungswinkel 26a größer als 45°. Im vorliegenden Fall beträgt der erste Steigungswinkel 26a etwa 60°. Ferner beträgt im vorliegenden Fall der zweite Steigungswinkel 30a etwa 45°. Der zweite Steigungswinkel 30a ist kleiner als der erste Steigungswinkel 26a.

Die Biegestelle 24a folgt in der Querbetrachtung zumindest abschnittsweise einem zumindest annähernd geraden Verlauf. Im vorliegenden Fall folgt ein Großteil der Biegestelle 24a in der Querbetrachtung dem geraden Verlauf.

Die Wendel 12a folgt in der Querbetrachtung zumindest abschnittsweise einem stufigen Verlauf. Der stufige Verlauf ist schräg-stufig.

Der erste Schenkel 20a folgt zumindest abschnittsweise einem geraden Verlauf. Im vorliegenden Fall folgt der erste Schenkel 20a einem geraden Verlauf. Der zweite Schenkel 22a folgt zumindest abschnittsweise einem geraden Verlauf. Im vorliegenden Fall folgt der zweite Schenkel 22a einem geraden Verlauf. Der erste Schenkel 20a und/oder der zweite Schenkel 22a sind frei von einer Krümmung und/oder einer Biegung und/oder einem Knick. Die Biegestelle 24a umfasst einen Verlauf, der in einer Längsbetrachtung parallel zu der Längsrichtung 28a der Wendel 12a eine Biegung um 180° beschreibt. In der Figur 4a ist die Wendel 12a in der Längsbetrachtung dargestellt.

Der erste Schenkel 20a verläuft zumindest abschnittsweise, insbesondere vollständig, in einer ersten Ebene und der zweite Schenkel 22a verläuft zumindest abschnittsweise, insbesondere vollständig, in einer zu der ersten Ebene parallelen zweiten Ebene. In der Längsbetrachtung verläuft der erste Schenkel 20a parallel zu dem zweiten Schenkel 22a.

Die weitere Wendel 14a weist eine weitere Biegestelle 32a auf. Die Biegestelle 24a und die weitere Biegestelle 32a sind verbunden. Die Biegestelle 24a und die weitere Biegestelle 32a bilden einen Verknüpfungspunkt der ersten Wendel 12a und der weiteren Wendel 14a.

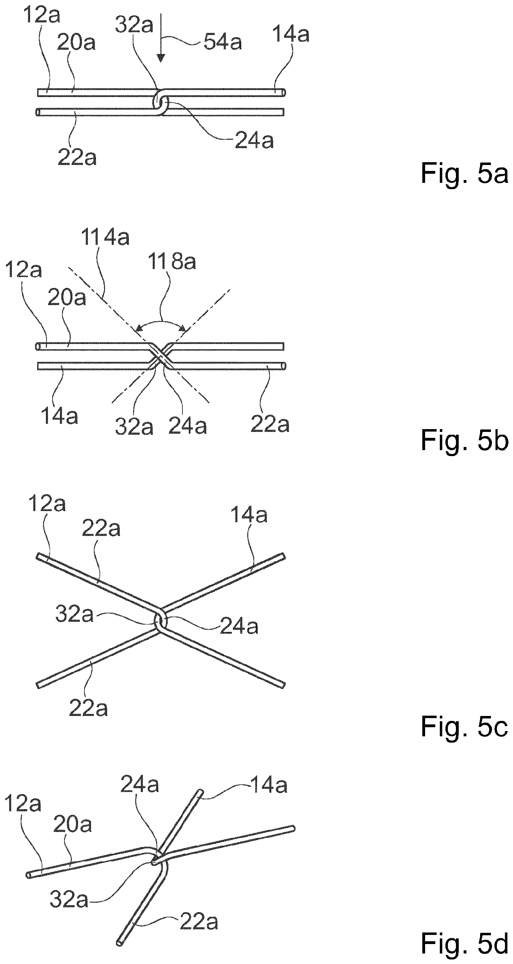

Die Figur 5 zeigt einen Teil des Drahtgeflechts 10a, der die Biegestelle 24a und die weitere Biegestelle 32a umfasst, in unterschiedlichen Ansichten. Figur 5a zeigt eine Betrachtung in Längsrichtung 28a der Wendel 12a. Figur 5b zeigt den Teil des Drahtgeflechts 10a in einer Querbetrachtung senkrecht zu der Längsrichtung 28a der Wendel 12a in der Haupterstreckungsebene der Wendel 12a. Figur 5c zeigt eine Betrachtung in Frontalrichtung 54a. Figur 5d zeigt eine perspektivische Betrachtung.

Die Wendel 12a und die weitere Wendel 14a kreuzen sich in einem Bereich der weiteren Biegestelle 32a zumindest im Wesentlichen senkrecht. In der Querbetrachtung schließen die Biegestelle 24a und die weitere Biegestelle 32a einen Kreuzungswinkel 118a ein. Der Kreuzungswinkel 118a ist abhängig von dem zweiten Steigungswinkel 30a und einem entsprechend definierten weiteren zweiten Steigungswinkel der weiteren Wendel 14a. Im vorliegenden Fall beträgt der Kreuzungswinkel 118a 90°.

Auch für andere erste Steigungswinkel wird vorteilhaft ein zweiter Steigungswinkel von 45° gewählt, sodass sich entsprechend ausgestaltete Wendeln an Verbindungspunkten senkrecht kreuzen und diese Verbindungspunkte vorteilhaft eine hohe mechanische Belastbarkeit aufweisen.

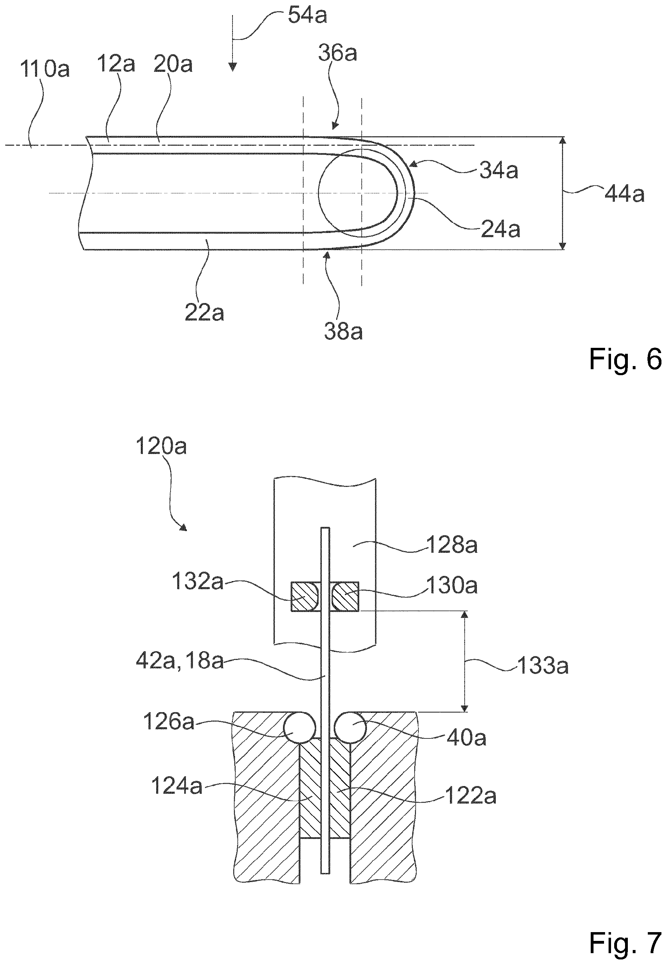

Die Figur 6 zeigt die Wendel 12a, betrachtet in Längsrichtung 28a der Wendel 12a, in einer schematischen Darstellung. In den Figuren 1 bis 5 ist die Wendel 12a und insbesondere die Biegestelle 24a gegenüber der Darstellung in der Figur 6 vereinfacht dargestellt. In der Längsbetrachtung parallel zu der Längsrichtung 28a der Wendel 12a umfasst die Biegestelle 24a einen Biegebereich 34a mit einer Biegekrümmung und einen mit dem ersten Schenkel 20a verbundenen ersten Übergangsbereich 36a mit einer von der Biegekrümmung verschiedenen ersten Übergangskrümmung. Der Biegebereich 34a ist mit dem ersten Übergangsbereich 36a verbunden. Der Biegebereich 34a und der erste Übergangsbereich 36a sind unmittelbar nebeneinander angeordnet und gehen insbesondere ineinander über. Der Biegebereich 34a und der erste Übergangsbereich 36a sind einteilig miteinander verbunden. Der erste Übergangsbereich 36a geht in den ersten Schenkel 20a über. Der erste Übergangsbereich 36a ist einteilig mit dem ersten Schenkel 20a verbunden.

Die Biegestelle 24a umfasst in der Längsbetrachtung einen mit dem zweiten Schenkel 22a verbundenen zweiten Übergangsbereich 38a mit einer von der Biegekrümmung verschiedenen zweiten Übergangskrümmung. Der zweite Übergangsbereich 38a ist einteilig mit dem Biegebereich 34a verbunden. Der zweite Übergangsbereich 38a geht in den zweiten Schenkel 22a über. Der zweite Übergangsbereich 38a ist einteilig mit dem zweiten Schenkel 22a verbunden. Der Biegebereich 34a, der erste Übergangsbereich 36a und der zweite Übergangsbereich 38a bilden gemeinsam die Biegestelle 24a aus.

Die erste Übergangskrümmung und die zweite Übergangskrümmung sind identisch. Es ist aber auch denkbar, dass eine erste Übergangskrümmung und eine zweite Übergangskrümmung voneinander verschieden sind, wodurch beispielsweise ein Drahtgeflecht mit, insbesondere bezüglich ihrer Federeigenschaften und/oder ihrer Verformungseigenschaften, unterschiedlicher Vorder- und Rückseite erzeugt werden kann.

In der Längsbetrachtung sind der erste Übergangsbereich 36a und der zweite Übergangsbereich 38a spiegelsymmetrisch ausgebildet. Der erste Übergangsbereich 36a und der zweite Übergangsbereich 38a sind spiegelsymmetrisch bezüglich einer Haupterstreckungsebene des Drahtgeflechts 10a. Der erste Übergangsbereich 36a und der zweite Übergangsbereich 38a sind spiegelsymmetrisch bezüglich einer Ebene, die zentral zwischen der Ebene, in welcher der erste Schenkel 20a verläuft, und der dazu parallelen Ebene, in welcher der zweite Schenkel 22a verläuft, angeordnet und zu diesen Ebenen parallel ist.

Die Biegekrümmung ist größer als die erste Übergangskrümmung. Die Biegekrümmung ist größer als die zweite Übergangskrümmung. Der Biegebereich 34a folgt einem kreisförmigen Verlauf. Der Biegebereich 34a ist in der Längsbetrachtung kreisbogenförmig gebogen. Der Biegebereich 34a ist in der Längsbetrachtung um weniger als 180° gebogen. Der Biegebereich 34a, der erste Übergangsbereich 36a und der zweite Übergangsbereich 38a sind in der Längsbetrachtung gemeinsam um 180° gebogen. Im vorliegenden Fall geht die Biegekrümmung, insbesondere der Verlauf des Biegebereichs 34a, kontinuierlich, insbesondere stetig, insbesondere frei von einem Knick, in die erste Übergangskrümmung, insbesondere in einen Verlauf des ersten Übergangsbereichs 36a, über. Ferner geht im vorliegenden Fall die Biegekrümmung, insbesondere der Verlauf des Biegebereichs 34a, kontinuierlich, insbesondere stetig, insbesondere frei von einem Knick, in die zweite Übergangskrümmung, insbesondere in einen Verlauf des zweiten Übergangsbereichs 38a, über. Außerdem geht im vorliegenden Fall die erste Übergangskrümmung, insbesondere der Verlauf des ersten Übergangsbereichs 36a, kontinuierlich, insbesondere stetig, insbesondere frei von einem Knick, in den geraden Verlauf des ersten Schenkels 20a über. Zudem geht im vorliegenden Fall die zweite Übergangskrümmung, insbesondere der Verlauf des zweiten Übergangsbereichs 38a, kontinuierlich, insbesondere stetig, insbesondere frei von einem Knick, in den geraden Verlauf des zweiten Schenkels 22a über. Es ist auch denkbar, dass entsprechende Übergange mit einem Knick versehen sind. Ferner ist denkbar, dass eine erste Übergangskrümmung und/oder eine zweite Übergangskrümmung verschwindet, wobei insbesondere ein erster Übergangsbereich und/oder ein zweiter Übergangsbereich zumindest abschnittsweise oder über ihre gesamte Erstreckung einen geraden Verlauf aufweisen können.

Die Figur 7 zeigt eine Biegetestvorrichtung 120a zur Durchführung eines Hin- und Herbiegeversuchs in einer schematischen Darstellung. Die Biegetestvorrichtung 120a weist Spannbacken 122a, 124a auf, die zu einem Einspannen eines Teststücks eines Drahts vorgesehen sind. Im gezeigten Fall handelt es sich um ein Teststück 42a des Drahts 18a. Die Biegetestvorrichtung 120a weist einen Biegehebel 128a auf, welcher hin- und herschwenkbar gelagert ist. Der Biegehebel 128a weist Mitnehmer 130a, 132a für das Teststück 42a des Drahts 18a auf. Die Biegetestvorrichtung 120a weist einen Biegezylinder 40a auf, um welchen das Teststück 42a des Drahts 18a bei dem Hin- und Herbiegeversuch gebogen wird. Die Biegetestvorrichtung 120a weist einen weiteren Biegezylinder 126a auf, der zu dem Biegezylinder 40a identisch ausgebildet ist. Der weitere Biegezylinder 126a ist dem Biegezylinder 40a gegenüberliegend angeordnet. Bei dem Hin- und Herbiegeversuch biegt der Biegehebel 128a das Teststück 42a des Drahts 18a abwechselnd um jeweils wenigstens 90° um den Biegezylinder 40a und den weiteren Biegezylinder 126a. Der Hin- und Herbiegeversuch wird üblicherweise solange durchgeführt, bis das Teststück 42a des Drahts 18a bricht um dessen Belastbarkeit und/oder Biegsamkeit zu testen.

Der Biegezylinder 40a weist einen Durchmesser von höchstens 2d, also höchsten einem Doppelten des Drahtdurchmessers d, auf. Im vorliegenden Fall weist der Biegezylinder 40a einen Durchmesser von 5 mm auf. Vorteilhaft wird für einen Drahtdurchmesser von 2 mm ein Biegezylinderdurchmesser von 3.75 mm gewählt. Vorteilhaft wird für einen Drahtdurchmesser von 3 mm ein Biegezylinderdurchmesser von 5 mm gewählt. Vorteilhaft wird für einen Drahtdurchmesser von 4 mm ein Biegezylinderdurchmesser von 7.5 mm gewählt. Vorteilhaft wird für einen Drahtdurchmesser von 5 mm ein Biegezylinderdurchmesser von 10 mm gewählt.

Das Teststück 42a des Drahts 18a weist im vorliegenden Fall eine Länge von etwa 85 mm auf. Vorteilhaft wird für einen Drahtdurchmesser von 2 mm eine Teststücklänge von etwa 75 mm gewählt. Vorteilhaft wird für einen Drahtdurchmesser von 3 mm eine Teststücklänge von etwa 85 mm gewählt. Vorteilhaft wird für einen Drahtdurchmesser von 4 mm eine Teststücklänge von etwa 100 mm gewählt. Vorteilhaft wird für einen Drahtdurchmesser von 5 mm eine Teststücklänge von etwa 115 mm gewählt. Vorzugsweise wird das Teststück 42a von dem Draht 18a abgeschnitten, insbesondere vor einer Herstellung des Längselements 16a und/oder des Drahtgeflechts 10a.

Der Draht 18a beziehungsweise das Teststück 42a des Drahts 18a ist bei dem Hin- und Herbiegeversuch um den Biegezylinder 40a und insbesondere um den weiteren Biegezylinder 126a um wenigstens 90° in entgegengesetzte Richtungen zumindest M-mal bruchfrei hin- und herbiegbar, wobei M, gegebenenfalls mittels Abrunden, als $C \cdot R^{-0,5} \cdot d^{-0,5}$ bestimmbar ist und wobei d der Durchmesser des Drahts 18a in mm, R die Zugfestigkeit des Drahts 18a in $N\ mm^{-2}$ und C ein Faktor von wenigstens $400\ N^{0,5}\ mm^{0,5}$ ist. Mittels des Hin- und Herbiegeversuchs kann der Draht 18a zusätzlich zu seiner Zugfestigkeit auch im Hinblick auf seine Biegeeigenschaften getestet werden, welche sowohl für eine Herstellung des Drahtgeflechts 10a als auch für ein Verformungsverhalten des Drahtgeflechts 10a bei einer Installation und insbesondere in einem Einschlagsfall verantwortlich sind. Wird ein höherer Wert für C gewählt, können biegsamere Drähte, beispielsweise für anspruchsvollere Anwendungen, gewählt werden. Beispielsweise kann C ein Faktor von $500\ N^{0,5}\ mm^{0,5}$ oder $750\ N^{0,5}\ mm^{0,5}$ oder $1000\ N^{0,5}\ mm^{0,5}$ oder $2000\ N^{0,5}\ mm^{0,5}$ oder noch größer sein. Im vorliegenden Fall ergibt sich gemäß dieser Formel ein Wert von

$$M' = 400\ N^{0,5}\ mm^{0,5} \times (1770\ N\ mm^2)^{-0,5} \times (3\ mm)^{-0,5} = 5{,}4892.$$

Im vorliegenden Fall beträgt M, bestimmt nach dieser Formel, nach Abrunden von M' demnach 5.

Die Biegetestvorrichtung 120a definiert eine Biegelänge 133a. Die Biegelänge 133a ist ein vertikaler Abstand zwischen einem höchsten Punkt des Biegezylinders 40a und einem tiefsten Punkt der Mitnehmer 130a, 132a. Im vorliegenden Fall beträgt die Biegelänge 133a etwa 35 mm. Vorteilhaft wird für einen Drahtdurchmesser von 2 mm eine Biegelänge von etwa 25 mm gewählt. Vorteilhaft wird für einen Drahtdurchmesser von 3 mm eine Biegelänge von etwa 35 mm gewählt. Vorteilhaft wird für einen Drahtdurchmesser von 4 mm eine Biegelänge von etwa 50 mm gewählt. Vorteilhaft wird für einen Drahtdurchmesser von 5 mm eine Biegelänge von etwa 75 mm gewählt.

Mittels des Hin- und Herbiegeversuchs kann ein geeigneter Draht 18a vor einer Herstellung des Drahtgeflechts 10a identifiziert werden. Der Draht 18a wird dabei als geeignet identifiziert, wenn das Teststück 42a des Drahts 18a bei dem Hin- und Herbiegeversuch wenigstens M-mal um den Biegezylinder 40a und insbesondere um den weiteren Biegezylinder 126a um wenigstens 90° in entgegengesetzte Richtungen bruchfrei hin- und hergebogen werden kann.

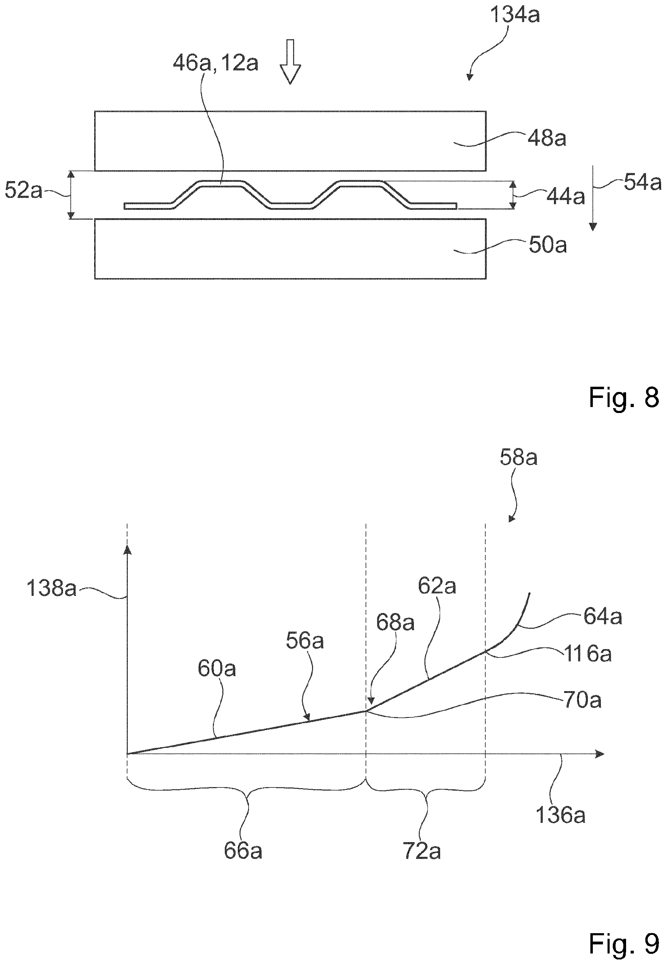

Die Figur 8 zeigt eine Pressvorrichtung 134a zur Durchführung eines Pressversuchs in einer schematischen Darstellung. Die Pressvorrichtung 134a weist zwei gegenüberliegende, parallele Platten 48a, 50a, nämlich eine erste Platte 48a und eine zweite Platte 50a, auf. Die Platten 48a, 50a sind zu einem Pressen entlang einer Pressstrecke 52a aufeinander zu bewegbar. Im vorliegenden Fall ist die erste Platte 48a auf die zweite Platte 50a zu bewegbar. Ferner werden im vorliegenden Fall die Platten 48a, 50a bei dem Pressversuch mit einer Geschwindigkeit von etwa 117 μm s⁻1 aufeinander zubewegt. Vorteilhaft wird vor dem Pressversuch die erste Platte 48a und/oder die zweite Platte 50a zunächst auf Kontakt zu dem Teststück 42a des Drahts 18a verfahren, insbesondere mit einer Vorkraft von etwa 10 kN und/oder mit einer Geschwindigkeit von etwa 333 μm s⁻¹, wobei auch andere Vorkräfte und/oder Geschwindigkeiten, beispielsweise abweichend um einen Faktor 2, einen Faktor 5, einen Faktor 10, einen Faktor 20, einen Faktor 50, einen Faktor 100, denkbar sind. Der Pressversuch umfasst ein Pressen eines Teststücks 46a der Wendel 12a. Das Teststück 46a der Wendel 12a ist der Wendel 12a entnommen, insbesondere aus dieser herausgeschnitten. Das Teststück 46a der Wendel 12a umfasst, insbesondere genau, fünf Schenkel und vier Biegestellen. Die Wendel 12a weist eine Quererstreckung 44a auf (vgl. auch Fig. 4a). Im vorliegenden Fall beträgt die Quererstreckung 44a etwa 12 mm. Die Quererstreckung 44a ist abhängig von einer Geometrie der Biegestelle 24a. Die Quererstreckung 44a ist abhängig von der Biegekrümmung, der ersten Übergangskrümmung und der zweiten Übergangskrümmung. Es sind beliebige andere Quererstreckungen sowie deren Anpassung an eine Anwendung denkbar. Beispielsweise können kleine Quererstreckungen verwendet werden, wenn ein Drahtgeflecht mit einer geringen Dicke benötigt wird, beispielsweise eine Quererstreckung von höchstens 10 mm oder von höchstens 7 mm. Ebenso sind größere Quererstreckungen denkbar, beispielsweise eine Quererstreckung von mehr als 15 mm oder von mehr als 25 mm oder von mehr als 40 mm oder noch mehr. Insbesondere ist denkbar, im Fall von größeren Durchmessern von Längselementen entsprechend größere Quererstreckungen zu wählen. Es sind aber auch eng gebogene Drahtgeflechte denkbar, welche eine geringe Quererstreckung bei einem großen Durchmesser eines entsprechenden Längselements aufweisen. Insbesondere um geringe Geflechtdicken zu realisieren ist denkbar, dass sich eine erste Biegestelle und eine zweite Biegestelle unter einem kleinen Winkel kreuzen, wobei insbesondere ein entsprechender zweiter Steigungswinkel einen Wert von deutlich unter 45°, beispielsweise von 30° oder von 20° oder noch weniger aufweist. Ebenso ist denkbar, dass sich eine erste Biegestelle und eine zweite Biegestelle unter einem großen Winkel kreuzen, wobei ein entsprechender zweiter Steigungswinkel einen Wert von deutlich über 45°, beispielsweise von 60° oder von 70° oder noch mehr aufweist, wodurch insbesondere ein Drahtgeflecht mit einer großen Dicke und schmal ausgeführten Verknüpfungspunkten zwischen Wendeln realisierbar ist.

Die Figur 9 zeigt eine Federkennlinie 56a des Teststücks 46a der Wendel 12a bei dem Pressversuch in einem schematischen Pressstrecke-Kraft-Diagramm 58a. Das Pressstrecke-Kraft-Diagramm 58a umfasst eine Pressstrecke-Achse 136a, auf welcher eine Position der Platten 48a, 50a, insbesondere der ersten Platte 48a, entlang der Pressstrecke 52a aufgetragen ist. Das Pressstrecke-Kraft-Diagramm 58a umfasst eine Kraft-Achse 138a, auf welcher eine bei dem Pressversuch auftretende Presskraft an einer gegebenen Stelle der Pressstrecke 52a aufgetragen ist. Die Pressvorrichtung 134a ist dazu vorgesehen, die Federkennlinie 56a gemäß des Pressstrecke-Kraft-Diagramms 58a zu ermitteln. Das der Wendel 12a entnommene Teststück 46a der Wendel 12a zeigt bei dem Pressversuch zwischen den parallelen Platten 48a, 50a, wobei der Pressversuch ein Pressen mittels Bewegen der Platten 48a, 50a entlang der Pressstrecke 52a parallel zu der Frontalrichtung 54a der Wendel 12a beinhaltet, die Federkennlinie 56a, die in dem Pressstrecke-Kraft-Diagramm 58a ausgehend von einem Beginn der Pressstrecke 52a eine zumindest annähernd linear verlaufende erste Teilkennlinie 60a mit einer ersten Steigung aufweist. Im vorliegenden Fall verläuft die erste Teilkennlinie 60a linear.

Die Pressstrecke 52a beginnt dabei mit einem Anliegen der Platten 48a, 50a an dem Teststück 46a der Wendel12a, bei welchem noch keine Presskraft auf das Teststück 46a der Wendel 12a wirkt. Die Pressstrecke 52a erstreckt sich dann bis zu einem Punkt, an welchem das Teststück 46a der Wendel 12a flach gedrückt ist. Insbesondere erstreckt sich die Pressstrecke 52a über eine Distanz, die in etwa einer Differenz der Quererstreckung 44a und des Drahtdurchmessers d entspricht. Insbesondere wird das Teststück 46a der Wendel 12a bei dem Pressversuch zumindest im Wesentlichen bis auf den Drahtdurchmesser d zusammengedrückt.

Die erste Teilkennlinie 60a erstreckt sich über einen Pressstrecken-Wertebereich 66a, der wenigstens einem Viertel der Quererstreckung 44a der Wendel 12a entspricht.

An die erste Teilkennlinie 60a schließt sich eine annähernd linear verlaufende zweite Teilkennlinie 62a an. Die zweite Teilkennlinie 62a weist eine zweite Steigung auf, die größer ist als die erste Steigung. Die zweite Steigung ist höchstens viermal so groß wie die erste Steigung. Im vorliegenden Fall ist die zweite Steigung etwa doppelt so groß wie die erste Steigung. Es sind aber auch andere Faktoren zwischen der ersten Steigung und der zweiten Steigung denkbar, wie beispielsweise 1,1 oder 1,5 oder 2,5 oder 3 oder 3,5 oder dergleichen.

Die Federkennlinie 56a weist in einem Übergangsbereich 68a zwischen der ersten Teilkennlinie 60a und der zweiten Teilkennlinie 62a einen Knick 70a auf. Der Knick 70a entspricht einer sprunghaften Änderungen einer Steigung der Federkennlinie 56a von der ersten Steigung zu der zweiten Steigung.

Die zweite Teilkennlinie 62a erstreckt sich über einen Pressstrecken-Wertebereich 72a, der wenigstens einem Fünftel der Quererstreckung 44a der Wendel 12a entspricht.

An die zweite Teilkennlinie 62 schließt sich eine konvex gekrümmte dritte Teilkennlinie 64a an. Die dritte Teilkennlinie 64a weist eine sich stetig vergrößernde Steigung auf. Ein Übergang zwischen der zweiten Teilkennlinie 62a und der dritten Teilkennlinie 64a ist frei von einem Knick. Die zweite Steigung geht kontinuierlich in die Steigung der dritten Teilkennlinie 64a über. Die Steigung der dritten Teilkennlinie 64a entspricht an einem Übergangspunkt 116a zwischen der zweiten Teilkennlinie 62a und der dritten Teilkennlinie 64a der zweiten Steigung.

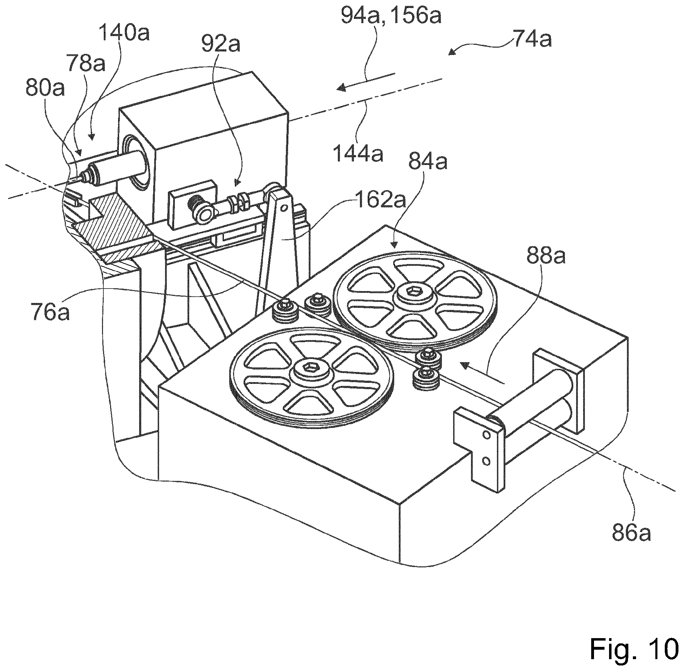

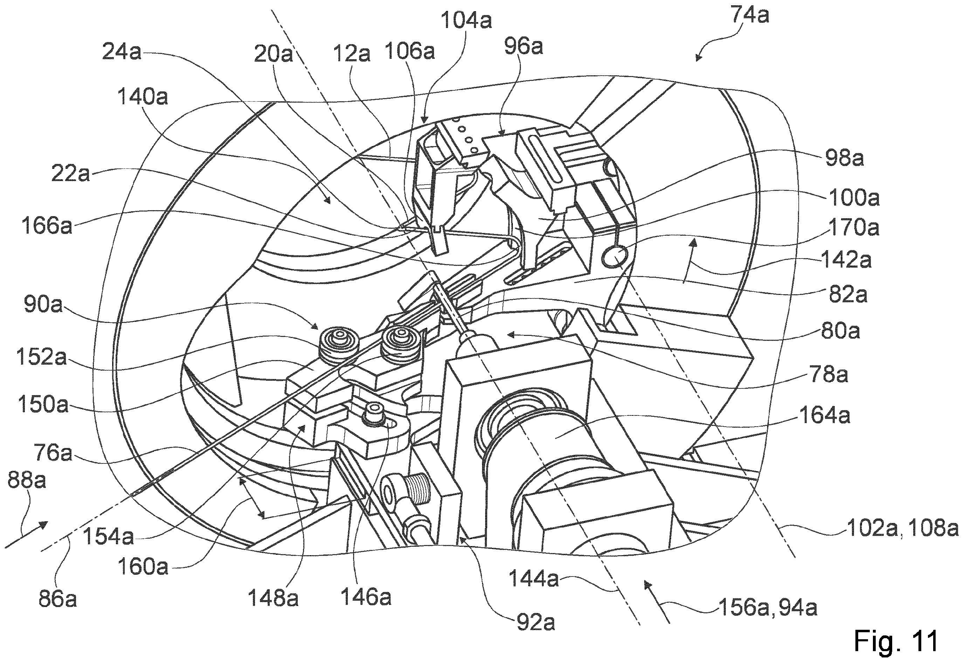

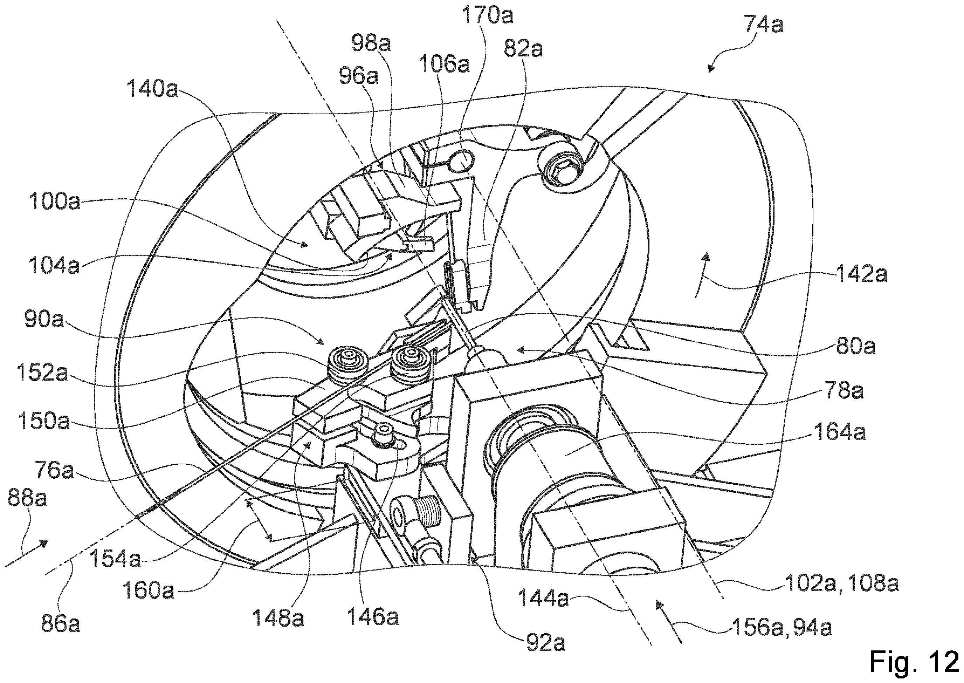

Die Figur 10 zeigt eine Biegevorrichtung 74a zur Herstellung des Drahtgeflechts 10a in einer perspektivischen Darstellung. Die Figur 11 zeigt einen Biegeraum 140a der Biegevorrichtung 74a in einem ersten Betriebszustand in einer perspektivischen Darstellung. Die Figur 12 zeigt den Biegeraum 140a in einem zweiten Betriebszustand in einer perspektivischen Darstellung. Die Biegevorrichtung 74a ist dazu vorgesehen, das Drahtgeflecht 10a herzustellen. Die Biegevorrichtung 74a ist dazu vorgesehen, die Wendel 12a herzustellen. Die Biegevorrichtung 74a ist zu einem Biegen der Wendel 12a gemäß der Geometrie der Wendel 12a, insbesondere der Schenkel 20a, 22a und der Biegestelle 24a der Wendel 12a, vorgesehen. Die Biegevorrichtung 74a ist dazu vorgesehen, das Drahtgeflecht 10a beziehungsweise die Wendel 12a aus einem Wendelrohling 76a zu fertigen. Der Wendelrohling 76a wird dabei von dem Längselement 16a in einem ungebogenen Zustand gebildet. Im vorliegenden Fall bildet der Draht 18a den Wendelrohling 76a. Es ist aber auch denkbar, dass ein Wendelrohling als ein Drahtbündel und/oder eine Drahtlitze und/oder ein Drahtseil und/oder ein anderes Längselement ausgebildet ist. Die Biegevorrichtung 74a ist dazu vorgesehen, die Wendel 12a mittels eines Biegens des Wendelrohlings 76a zu fertigen.

Die Biegevorrichtung 74a weist eine Biegeeinheit 78a auf. Die Biegeeinheit 78a umfasst einen Biegedorn 80a sowie einen Biegetisch 82a. Der Biegetisch 82a ist zu einem Biegen des Wendelrohlings 76a um den Biegedorn 80a vorgesehen. Der Biegetisch 82a ist vollständig um den Biegedorn 80a umlaufend gelagert. Bei einer Fertigung läuft der Biegetisch 82a kontinuierlich in eine Umlaufrichtung 142a um den Biegedorn 80a. Der Biegedorn 80a weist eine Längsachse 144a auf. Die Längsachse 144a des Biegedorns 80a verläuft parallel zu einer Haupterstreckungsrichtung 94a des Biegedorns 80a.

Die Biegevorrichtung 74a weist eine Vorschubeinheit 84a auf, die zu einem Vorschieben des Wendelrohlings 76a entlang einer Vorschubachse 86a in eine Vorschubrichtung 88a vorgesehen ist. Die Vorschubachse 86a ist parallel zu der Vorschubrichtung 88a angeordnet. Die Vorschubrichtung 88a verläuft parallel zu einer Haupterstreckungsrichtung des Wendelrohlings 76a. Die Vorschubachse 86a schließt mit der Längsachse 144a des Biegedorns 80a einen Winkel ein, der zumindest im Wesentlichen und insbesondere genau dem ersten Steigungswinkel 26a entspricht. Der erste Steigungswinkel 26a kann mittels eines Verstellens der Vorschubachse 86a relativ zu der Längsachse 144a des Biegedorns 80a eingestellt werden.

Die Biegevorrichtung 74a weist eine Geometrieeinstelleinheit 90a auf, die zu einem Einstellen einer Geometrie der Wendel 12a vorgesehen ist. Die Geometrieeinstelleinheit 90a ist zu einem Einstellen einer Länge des ersten Schenkels 20a und des zweiten Schenkels 22a vorgesehen. Die Geometrieeinstelleinheit 90a ist zu einem Einstellen der Quererstreckung 44a der Wendel 12a vorgesehen. Die Geometrieeinstelleinheit 90a ist zu einem Einstellen des ersten Steigungswinkels 26a vorgesehen. Die Geometrieeinstelleinheit 90a ist zu einem Einstellen des zweiten Steigungswinkels 30a vorgesehen. Die Geometrieeinstelleinheit 90a ist zu einem Einstellen der Biegekrümmung vorgesehen. Die Geometrieeinstelleinheit 90a ist zu einem Einstellen der ersten Übergangskrümmung vorgesehen. Die Geometrieeinstelleinheit 90a ist zu einem Einstellen der zweiten Übergangskrümmung vorgesehen. Die Geometrieeinstelleinheit 90a ist zu einem Einstellen der Geometrie der Biegestelle 24a, insbesondere des Biegebereichs 34a, insbesondere des ersten Übergangsbereichs 36a und insbesondere des zweiten Übergangsbereichs 38a vorgesehen. Die Geometrieeinstelleinheit 90a umfasst ein Ausrichtelement 146a zum Einstellen des Winkels zwischen der Vorschubachse 86a und der Längsachse 144a des Biegedorns 80a. Das Ausrichtelement 146a ist als ein Langloch ausgebildet.

Bei der Fertigung wird der Wendelrohling 76a wiederholt vorgeschoben. Die Biegeeinheit 78a, insbesondere der Biegetisch 82a, biegt nach erfolgtem Vorschub den Wendelrohling 76a jeweils um den Biegedorn 80a, um eine Biegestelle der gefertigten Wendel 12a zu erzeugen. Ein Durchmesser des Biegedorns 80a definiert dabei die Biegekrümmung des Biegebereichs 34a sowie zumindest teilweise die Quererstreckung 44a der Wendel 12a. Insbesondere definiert der Durchmesser des Biegedorns 80a einen Innenradius der Biegestelle 24a.

Die Geometrieeinstelleinheit 90a weist eine Querhubeinheit 92a auf, die dazu vorgesehen ist, eine Position des Biegetischs 82a entlang der Haupterstreckungsrichtung 94a des Biegedorns 80a relativ zu der Vorschubachse 86a periodisch und zu einem Umlaufen des Biegetischs 82a um den Biegedorn 80a synchronisiert zu verändern. Im vorliegenden Fall weist die Querhubeinheit 92a ein Zuführelement 148a auf, welches dem Biegetisch 82a den Wendelrohling 76a zuführt. Das Zuführelement 148a ist als ein Führungstisch 150a mit Führungsrollen 152a, 154a ausgebildet. Das Zuführelement 148a ist in eine Querhubrichtung 156a und entgegen dieser relativ zu dem Biegetisch 82a verschiebbar gelagert. Die Querhubrichtung 156a verläuft parallel zu der Haupterstreckungsrichtung 94a des Biegedorns 80a. Die Geometrieeinstelleinheit 90a ist dazu vorgesehen, einen maximalen Querhub 160a einzustellen. Das Zuführelement 148a ist parallel zu der Querhubrichtung 156a um den maximalen Querhub 160a verschiebbar.

Die Querhubeinheit 92a weist ein Kopplungselement 162a auf, welches eine Bewegung des Zuführelements 148a an das Umlaufen des Biegetischs 82a um den Biegedorn 80a mechanisch koppelt. Im vorliegenden Fall ist das Kopplungselement 162a ein Hebelantrieb, der das Zuführelement 148a mechanisch an einen nicht gezeigten gemeinsamen Antrieb der Biegevorrichtung 74a koppelt. Während eines Umlaufs des Biegetischs 82a um den Biegedorn 80a wird das Zuführelement 148a aus einer Ausgangsposition parallel zu der Querhubrichtung 156a weg von dem Biegetisch 82a ausgelenkt. Besonders vorteilhaft wird das Zuführelement 148a während dieses Umlaufs des Biegetischs 82a anschließend in seine Ausgangsposition zurückbewegt. Insbesondere ist die Querhubeinheit 92a dazu vorgesehen, eine bei dem Biegen entstehende Biegestelle mit dem zweiten Steigungswinkel 30a zu versehen. Insbesondere ist die Querhubeinheit 92a dazu vorgesehen, einen einstellbaren maximalen Querhub 160a zu erzeugen. Mittels des maximalen Querhubs 160a kann der zweite Steigungswinkel 30a eingestellt werden. Mittels des Querhubs 160a kann ein zweiter Steigungswinkel 30a erzeugt werden, der sich von dem ersten Steigungswinkel 26a unterscheidet, insbesondere indem der Wendelrohling 76a bei einem Biegen einer Biegestelle um den Biegedorn 80a seitlich versetzt wird.

Im vorliegenden Fall ist der Biegedorn 80a angetrieben. Der Biegedorn 80a ist um seine Längsachse 144a drehbar gelagert. Der Biegedorn 80a ist über einen Riemen 164a mit dem gemeinsamen Antrieb der Biegevorrichtung 74a gekoppelt. Der Biegedorn 80a ist auswechselbar ausgebildet. Die Biegeeinheit 78a ist mit Biegedornen mit unterschiedlichen Durchmessern bestückbar.

Die Geometrieeinstelleinheit 90a weist eine Anschlageinheit 96a mit zumindest einem Anschlagselement 98a auf, das eine maximale Vorschubposition für den Wendelrohling 76a definiert. Bei einem Vorschieben kann der Wendelrohling 76a von der Vorschubeinheit 84a maximal bis zu der maximalen Vorschubposition vorgeschoben werden. Der Wendelrohling 76a befindet sich vor dem Biegen durch den Biegetisch 82a um den Biegedorn 80a in der maximalen Vorschubposition. In der maximalen Vorschubposition stößt der Wendelrohling 76a mit einer zuletzt gebogenen Biegestelle 166a der Wendel 12a an dem Anschlagselement 98a an. Der in der Figur 11 dargestellte erste Betriebszustand entspricht einer Situation unmittelbar vor dem Biegen des Wendelrohlings 76a um den Biegedorn 80a. Der Wendelrohling 76a befindet sich in dem ersten Betriebszustand in der maximalen Vorschubposition. Der in der Figur 12 dargestellte zweite Betriebszustand entspricht einer Situation während des Biegens der Wendelrohlings 76a um den Biegedorn 80a. Der Biegetisch 82a ist in dem zweiten Betriebszustand entlang der Umlaufrichtung 142a gegenüber seiner Position in dem ersten Betriebszustand verschoben.

Das Anschlagselement 98a ist vollständig um den Biegedorn 80a umlaufend gelagert. Das Anschlagselement 98a läuft bei der Fertigung kontinuierlich um den Biegedorn 80a in die Umlaufrichtung 142a.

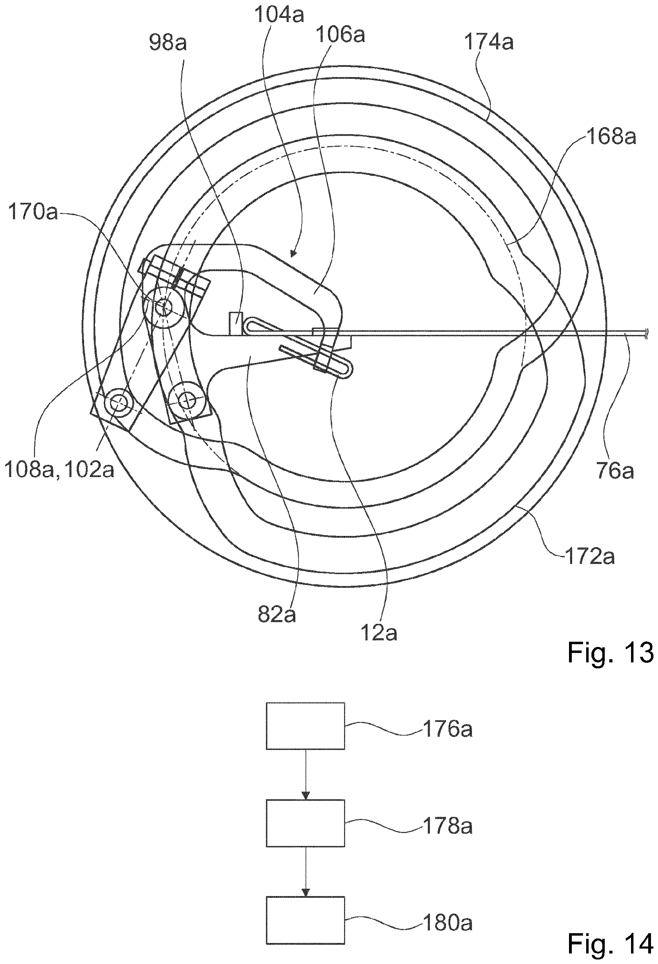

Eine Position des Biegetischs 82a relativ zu dem Anschlagselement 98a ist bei dem Umlaufen des Biegetischs 82a um den Biegedorn 80a veränderlich. Der Biegetisch 82a ist um eine Schwenkachse 102a schwenkbar gelagert, welche bei dem Umlaufen des Biegetischs 82a um den Biegedorn 80a selbst den Biegedorn 80a umläuft, insbesondere in die Umlaufrichtung 142a. Die Schwenkachse 102a bewegt sich bei der Fertigung auf einer Kreisbahn 168a (vgl. Fig. 13). Die Schwenkachse 102a bewegt sich bei der Fertigung mit einer konstanten Winkelgeschwindigkeit. Während des Biegens laufen der Biegetisch 82a und das Anschlagselement 98a mit gleicher Geschwindigkeit um den Biegedorn 80a. Nach dem Biegen schwenkt der Biegetisch 82a um die Schwenkachse 102a aus, wodurch ein maximaler Biegewinkel definiert ist. Der Biegetisch 82a schwenkt anschließend, insbesondere während des Vorschiebens des Wendelrohlings 76a, wieder um die Schwenkachse 102a zurück. In dem ersten Betriebszustand liegt das Anschlagselement 98a auf dem Biegetisch 82a auf.

Das Anschlagselement 98a weist eine konkav gekrümmte Anschlagsfläche 100a auf. Die Anschlagsfläche 100a ist in der Umlaufrichtung 142a entsprechend kreisbogenförmig gekrümmt. Ferner ist die Anschlagsfläche 100a senkrecht zu der Krümmung in Umlaufrichtung 142a kreisbogenförmig gekrümmt. Ein Radius dieser Krümmung senkrecht zur Umlaufrichtung 142a entspricht zumindest im Wesentlichen einer Krümmung der Biegestelle 24a. In der maximalen Vorschubposition liegt die zuletzt gebogene Biegestelle 166a an der Anschlagsfläche 100a an, welche sich kreisbogenförmig um die zuletzt gebogene Biegestelle 166a krümmt.

In einem Vorschubbetriebszustand, in welchem der Vorschub des Wendelrohlings 76a erfolgt, ist eine Position des Anschlagselements 98a relativ zu der Vorschubachse 86a veränderlich. Das Anschlagselement 98a bewegt sich in dem Vorschubbetriebszustand, insbesondere nachdem der Wendelrohling 76a an dem Anschlagselement 98a anliegt, sich demnach insbesondere in der maximalen Vorschubposition befindet, an der zuletzt gebogenen Biegestelle 166a in Umlaufrichtung 142a entlang.

Die Biegeeinheit 78a ist zu einem Biegen eines Wendelrohlings mit zumindest einem Draht aus einem hochfesten Stahl vorgesehen. Im vorliegenden Fall kann der Wendelrohling 76a mittels der Biegeeinheit 78a gebogen werden. Die Biegeeinheit 78a ist ferner dazu vorgesehen, Wendelrohlinge aus unterschiedlichen Längselementen, beispielsweise aus Drahtlitzen, Drahtseilen, Drahtbündeln oder dergleichen, sowie Einzeldrähte, jeweils insbesondere mit unterschiedlichen Durchmessern und/oder Zugfestigkeiten, zu Wendeln zu biegen. Ferner ist die Biegevorrichtung 74a dazu vorgesehen, ein Drahtgeflecht aus entsprechend gebogenen Wendeln zu fertigen, insbesondere das Drahtgeflecht 10a.

Die Biegeeinheit 78a ist dazu vorgesehen, den Wendelrohling 76a bei einem einzelnen Umlauf, insbesondere bei jedem Umlauf, des Biegetischs 82a um den Biegedorn 80a um mehr als 180° zu biegen. Ein Biegewinkel wird dabei durch einen Zeitpunkt eines Verschwenkens des Biegetischs 82a um die Schwenkachse 102a definiert. Die Biegeeinheit 78a ist zu einem Überbiegen des Wendelrohlings 76a vorgesehen, insbesondere um ein Rückfedern des Wendelrohlings 76a nach dem Biegen aufgrund dessen hoher Härte auszugleichen. Die Biegeeinheit 78a ist dazu vorgesehen, die Biegestelle 24a mit einem Gesamtwinkel von genau 180° zu versehen, sodass die Wendel 12a in sich gerade verlaufend gefertigt werden kann.

Die Geometrieeinstelleinheit 90a weist eine Halteeinheit 104a mit einem Halteelement 106a auf, das die Wendel 12a bei dem Biegen um den Biegedorn 80a vom Biegedorn 80a aus betrachtet hinter dem Biegetisch 82a zumindest teilweise fixiert. Das Halteelement 106a umgreift die Wendel 12a teilweise. Das Halteelement 106a ist gabelartig ausgebildet. Das Halteelement 106a stützt die Wendel 12a bei einem Biegen des Wendelrohlings 76a um den Biegedorn 80a, bei welchem die Wendel 12a in Umlaufrichtung 142a mitrotiert wird.

Das Halteelement 106a ist vollständig um den Biegedorn 80a umlaufend gelagert. Das Halteelement 106a ist um eine Schwenkachse 108a schwenkbar gelagert, die bei einem Umlaufen des Halteelements 106a um den Biegedorn 80a selbst den Biegedorn 80a umläuft. Das Halteelement 106a ist an dem Biegetisch 82a gelagert. Die Schwenkachse 108a des Halteelements 106a ist identisch mit der Schwenkachse 102a des Biegetischs 82a. Die Schwenkachse 108a verläuft durch einen Lagerbolzen 170a, der das Halteelement 106a an dem Biegetisch 82a lagert. Bei dem Umlaufen des Halteelements 106a um den Biegedorn 80a ist eine Position des Halteelements 106a relativ zu dem Biegetisch 82a veränderlich. Nach dem Biegen wird das Halteelement 106a von der Wendel 12a weggeschwenkt und unter dieser hindurch zurück in eine Ausgangsposition bewegt. Anschließend umgreift das Halteelement 106a die Wendel 12a im Bereich eines anderen Schenkels als zuvor.

Die Figur 13 zeigt Führungskulissen 172a, 174a des Biegetischs 82a und des Halteelements 106a in einer schematischen Seitenansicht. Eine erste Führungskulisse 172a bewerkstelligt das Verschwenken des Biegetischs 82a um die Schwenkachse 102a bei dem Umlaufen des Biegetischs 82a um den Biegedorn 80a. Eine zweite Führungskulisse 174a bewerkstelligt das Verschwenken des Halteelements 106a um die Schwenkachse 108a des Halteelements 106a bei dem Umlaufen des Halteelements 106a um den Biegedorn 80a.

Die Figur 14 zeigt ein schematisches Ablaufdiagramm eines Verfahrens zur Herstellung des Drahtgeflechts 10a. In einem ersten Verfahrensschritt 176a wird dem Längselement 16a ein Teststück 42a des Drahts 18a entnommen und der Draht 18a mittels Durchführung des beschriebenen Hin- und Herbiegeversuchs als geeignet identifiziert. Ein ungeeigneter Draht würde entsprechend nicht weiter verwendet werden. In einem zweiten Verfahrensschritt 178a wird das Drahtgeflecht 10a mit dem als geeignet identifizierten Draht 18a aus dem Längselement 16a gefertigt. Das Drahtgeflecht 10a wird mittels Biegen gefertigt, wobei die Wendel 12a hergestellt wird. In dem zweiten Verfahrensschritt 178a wird die Wendel 12a mittels der Biegevorrichtung 74a hergestellt. In einem dritten Verfahrensschritt 180a wird der Wendel 12a ein Teststück 46a der Wendel 12a entnommen und mittels des beschriebenen Pressversuchs getestet. Der dritte Verfahrensschritt 180a kann nach einem kurzen Testlauf einer Fertigung eines Probestücks des Drahtgeflechts 10a und/oder zu Zwecken einer Qualitätskontrolle erfolgen.

Die beschriebene Verfahrensschritte 176a, 178a, 180a sind auch unabhängig voneinander durchführbar. Beispielsweise ist denkbar, einen mittels des Hin- und Herbiegeversuchs als geeignet identifizierten Draht beziehungsweise ein entsprechendes Längselement auf andere Weise zu einem Drahtgeflecht zu verarbeiten. Ferner ist denkbar, ein Drahtgeflecht mittels der Biegevorrichtung zu fertigen, welches keinen Draht aufweist, der das beschriebene Verhalten in dem Hin- und Herbiegeversuch und/oder bei dem Pressversuch zeigt. Außerdem ist ein beliebiges Herstellungsverfahren für ein Drahtgeflecht denkbar, welches insbesondere das beschriebene Verhalten bei dem Pressversuch zeigt. Grundsätzlich ist denkbar, ein Drahtgeflecht mit einem oder mehreren der beschriebenen Merkmale mittels eines Flechtmessers und/oder eines hin- und herschwenkbaren Biegetisches oder einer anderen geeigneten Herstellungsvorrichtung zu fertigen.

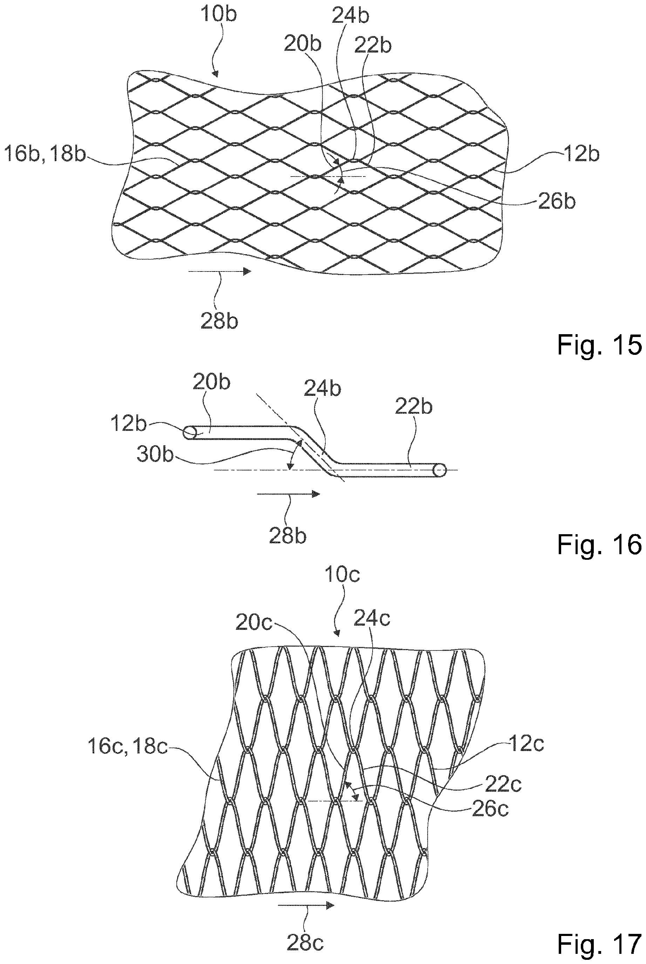

In den Figuren 15 bis 25 sind neun weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 14, verwiesen werden kann. Zur Unterscheidung der Ausführungsbeispiele ist der Buchstabe a den Bezugszeichen des Ausführungsbeispiels in den Figuren 1 bis 14 nachgestellt. In den Ausführungsbeispielen der Figuren 15 bis 25 ist der Buchstabe a durch die Buchstaben b bis j ersetzt.

Die Figur 15 zeigt ein zweites Drahtgeflecht 10b in einer schematischen Frontansicht. Das zweite Drahtgeflecht 10b weist mehrere ineinander geflochtene Wendeln 12b auf, von denen wenigstens eine Wendel 12b aus einem Längselement 16b mit einem Draht 18b gefertigt ist. Das Längselement 16b ist im vorliegenden Fall als ein Drahtbündel mit dem Draht 18b ausgebildet. Die Wendel 12b weist einen ersten Schenkel 20b, einen zweiten Schenkel 22b und eine den ersten Schenkel 20b und den zweiten Schenkel 22b verbindende Biegestelle 24b auf. In einer Frontalbetrachtung senkrecht zu einer Haupterstreckungsebene der Wendel 12b verläuft der erste Schenkel 20b mit einem ersten Steigungswinkel 26b bezüglich einer Längsrichtung 28b der Wendel 12b.

Die Figur 16 zeigt die Biegestelle 24b der Wendel 12b in einer Querbetrachtung parallel zu der Haupterstreckungsebene der Wendel 12b und senkrecht zu der Längsrichtung 28b der Wendel 12b. In der Querbetrachtung verläuft die Biegestelle 24b zumindest abschnittsweise mit einem von dem ersten Steigungswinkel 26b verschiedenen zweiten Steigungswinkel 30b bezüglich der Längsrichtung 28b der Wendel 12b.

Im vorliegenden Fall ist der erste Steigungswinkel 26b kleiner als 45°. Der erste Steigungswinkel 26b beträgt etwa 30°. Das zweite Drahtgeflecht 10b weist aufgrund des kleinen ersten Steigungswinkel 26b breite Maschen auf.

Das zweite Drahtgeflecht 10b ist dazu vorgesehen, quer zu einem Hang ausgerollt zu werden, sodass quer zu dem Hang das zweite Drahtgeflecht 10b unterbrechungsfrei über eine große Strecke ausgelegt werden kann. Parallel zu dem Hang entspricht eine Höhe einer entsprechenden Installation demnach einer Breite des zweiten Drahtgeflechts 10b beziehungsweise einer Länge der Wendel 12b.

Der zweite Steigungswinkel 30b ist größer als der erste Steigungswinkel 26b. Im vorliegenden Fall beträgt der zweite Steigungswinkel 30b etwa 45°.

Die Figur 17 zeigt ein drittes Drahtgeflecht 10c in einer schematischen Frontansicht. Das dritte Drahtgeflecht 10c weist mehrere ineinander geflochtene Wendeln 12c auf, von denen wenigstens eine Wendel 12c aus einem Längselement 16c mit einem Draht 18c gefertigt ist. Das Längselement 16c ist im vorliegenden Fall als eine Drahtlitze mit dem Draht 18c ausgebildet. Das Längselement 16c weist mehrere umeinander gewickelte, identisch ausgebildete Drähte 18c auf. Die Wendel 12c weist einen ersten Schenkel 20c, einen zweiten Schenkel 22c und eine den ersten Schenkel 20c und den zweiten Schenkel 22c verbindende Biegestelle 24c auf. In einer Frontalbetrachtung senkrecht zu einer Haupterstreckungsebene der Wendel 12c verläuft der erste Schenkel 20c mit einem ersten Steigungswinkel 26c bezüglich einer Längsrichtung 28c der Wendel 12c.

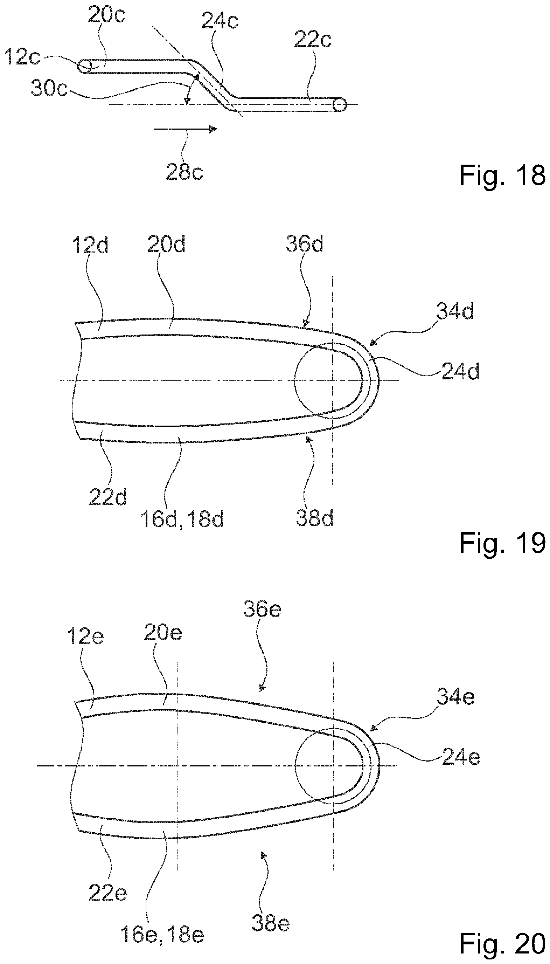

Die Figur 18 zeigt die Biegestelle 24c der Wendel 12c in einer Querbetrachtung parallel zu der Haupterstreckungsebene der Wendel 12c und senkrecht zu der Längsrichtung 28c der Wendel 12c. In der Querbetrachtung verläuft die Biegestelle 24c zumindest abschnittsweise mit einem von dem ersten Steigungswinkel 26c verschiedenen zweiten Steigungswinkel 30c bezüglich der Längsrichtung 28c der Wendel 12c.

Im vorliegenden Fall ist der erste Steigungswinkel 26c größer als 45°. Der erste Steigungswinkel 26c beträgt etwa 75°. Das dritte Drahtgeflecht 10c weist aufgrund des großen ersten Steigungswinkel 26c schmale Maschen auf. Das Drahtgeflecht 10c ist daher in eine Längsrichtung der Maschen sehr zugfest. Ferner ist das Drahtgeflecht 10c in eine Querrichtung der Maschen leichter dehnbar als in die Längsrichtung.

Der zweite Steigungswinkel 30c ist kleiner als der erste Steigungswinkel 26c. Im vorliegenden Fall beträgt der zweite Steigungswinkel 30c etwa 45°.

Die Figur 19 zeigt eine von der Erfindung abweichend ausgebildete Wendel 12d eines vierten Drahtgeflechts, betrachtet in eine Längsrichtung der Wendel 12d, in einer schematischen Darstellung. Die Wendel 12d ist aus einem Längselement 16d mit zumindest einem Draht 18d gefertigt. Die Wendel 12d weist einen ersten Schenkel 20d, einen zweiten Schenkel 22d sowie eine den ersten Schenkel 20d und den zweiten Schenkel 22d verbindende Biegestelle 24d auf. In einer Längsbetrachtung parallel zu einer Längsrichtung 28d der Wendel 12d umfasst die Biegestelle 24d einen Biegebereich 34d mit einer ersten Biegekrümmung. Ferner umfasst die Biegestelle 24d in der Längsbetrachtung einen mit dem ersten Schenkel 20d verbundenen ersten Übergangsbereich 36a mit einer von der Biegekrümmung verschiedenen ersten Übergangskrümmung. Zudem umfasst die Biegestelle 24d in der Längsbetrachtung einen mit dem zweiten Schenkel 22d verbundenen zweiten Übergangsbereich 38d mit einer zweiten Übergangskrümmung.

Der erste Schenkel 20d der nicht erfindungsgemäßen Wendel 12d weist einen gekrümmten Verlauf auf. Der erste Schenkel 20d ist frei von einem geraden Verlauf. Der Biegebereich 34d ist kreisbogenförmig gekrümmt. Die erste Übergangskrümmung und die zweite Übergangskrümmung sind identisch.

Die Figur 20 zeigt eine von der Erfindung abweichende Wendel 12e eines fünften Drahtgeflechts, betrachtet in eine Längsrichtung der Wendel 12e, in einer schematischen Darstellung. Die Wendel 12e ist aus einem Längselement 16e mit zumindest einem Draht 18e gefertigt. Die Wendel 12e weist einen ersten Schenkel 20e, einen zweiten Schenkel 22e sowie eine den ersten Schenkel 20e und den zweiten Schenkel 22e verbindende Biegestelle 24e auf. In einer Längsbetrachtung parallel zu einer Längsrichtung 28e der Wendel 12e umfasst die Biegestelle 24e einen Biegebereich 34e mit einer ersten Biegekrümmung. Ferner umfasst die Biegestelle 24e in der Längsbetrachtung einen mit dem ersten Schenkel 20e verbundenen ersten Übergangsbereich 36a mit einer von der Biegekrümmung verschiedenen ersten Übergangskrümmung. Zudem umfasst die Biegestelle 24e in der Längsbetrachtung einen mit dem zweiten Schenkel 22e verbundenen zweiten Übergangsbereich 38e mit einer zweiten Übergangskrümmung.

Der erste Übergangsbereich 36e folgt abschnittsweise einem geraden Verlauf. Der erste Übergangsbereich 36e bildet einen Teil des ersten Schenkels 20e aus. Im vorliegenden Fall bildet der erste Übergangsbereich 36e eine Hälfte des ersten Schenkels 20e aus. Der erste Übergangsbereich 36a geht kontinuierlich in den ersten Schenkel 20e über. In analoger Weise bildet der zweite Übergangsbereich 38e eine Hälfte des zweiten Schenkels 22e aus.

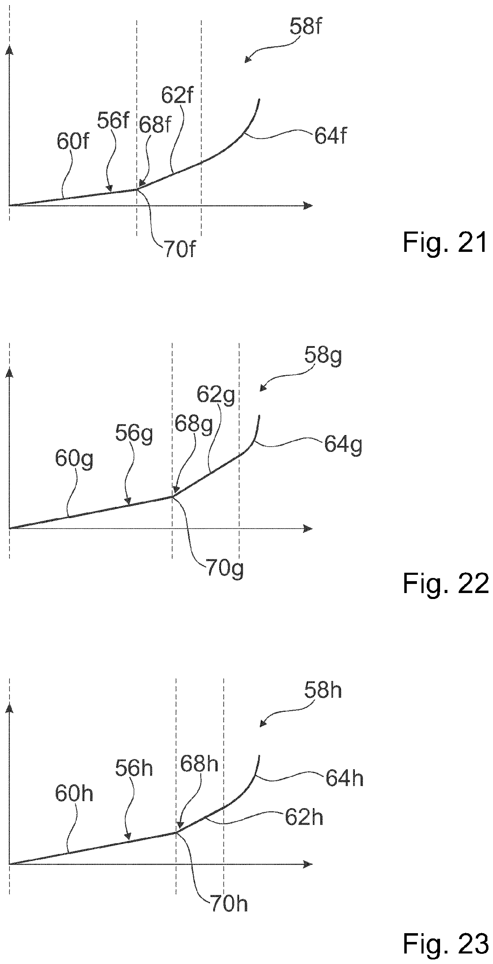

Die Figur 21 zeigt eine Federkennlinie 56f eines Teststücks einer Wendel eines sechsten Drahtgeflechts in einem schematischen Pressstrecke-Kraft-Diagramm 58f. Die Federkennlinie 56f wurde analog zu der Federkennlinie 56a im Ausführungsbeispiel der Figuren 1 bis 14 mittels eines Pressens des Teststücks der Wendel entlang einer Pressstrecke ermittelt. Das sechste Drahtgeflecht ist aus einem hochfesten Stahldraht mit einem Drahtdurchmesser von 2 mm gefertigt. Das sechste Drahtgeflecht weist eine Schenkellänge von etwa 65 mm auf.

Die Federkennlinie 56f weist ausgehend von einem Beginn der Pressstrecke eine annähernd linear verlaufende erste Teilkennlinie 60f mit einer ersten Steigung auf. An die erste Teilkennlinie 60f schließt sich eine annähernd linear verlaufende zweite Teilkennlinie 62f mit einer zweiten Steigung an, die größer ist als die erste Steigung. In einem Übergangsbereich 68f zwischen der ersten Teilkennlinie 60f und der zweiten Teilkennlinie 62f weist die Federkennlinie 56f einen Knick 70f auf.

An die zweite Teilkennlinie 62f schließt sich eine konvex gekrümmte dritte Teilkennlinie 64f an. Ein Übergang zwischen der zweiten Teilkennlinie 62f und der dritten Teilkennlinie 64f ist frei von einem Knick.

Die Figur 22 zeigt eine Federkennlinie 56g eines Teststücks einer Wendel eines siebten Drahtgeflechts in einem schematischen Pressstrecke-Kraft-Diagramm 58g. Die Federkennlinie 56g wurde analog zu der Federkennlinie 56a im Ausführungsbeispiel der Figuren 1 bis 14 mittels eines Pressens des Teststücks der Wendel entlang einer Pressstrecke ermittelt. Das siebte Drahtgeflecht ist aus einem hochfesten Stahldraht mit einem Drahtdurchmesser von 2 mm gefertigt. Das siebte Drahtgeflecht weist eine Schenkellänge von etwa 45 mm auf.

Die Federkennlinie 56g weist ausgehend von einem Beginn der Pressstrecke eine annähernd linear verlaufende erste Teilkennlinie 60g mit einer ersten Steigung auf. An die erste Teilkennlinie 60g schließt sich eine annähernd linear verlaufende zweite Teilkennlinie 62g mit einer zweiten Steigung an, die größer ist als die erste Steigung. In einem Übergangsbereich 68g zwischen der ersten Teilkennlinie 60g und der zweiten Teilkennlinie 62g weist die Federkennlinie 56g einen Knick 70g auf.

An die zweite Teilkennlinie 62g schließt sich eine konvex gekrümmte dritte Teilkennlinie 64g an. Ein Übergang zwischen der zweiten Teilkennlinie 62g und der dritten Teilkennlinie 64g ist frei von einem Knick.

Die Figur 23 zeigt eine Federkennlinie 56h eines Teststücks einer Wendel eines achten Drahtgeflechts in einem schematischen Pressstrecke-Kraft-Diagramm 58h.

Die Federkennlinie 56h wurde analog zu der Federkennlinie 56a im Ausführungsbeispiel der Figuren 1 bis 14 mittels eines Pressens des Teststücks der Wendel entlang einer Pressstrecke ermittelt. Das achte Drahtgeflecht ist aus einem hochfesten Stahldraht mit einem Drahtdurchmesser von 3 mm gefertigt. Das achte Drahtgeflecht weist eine Schenkellänge von etwa 65 mm auf.

Die Federkennlinie 56h weist ausgehend von einem Beginn der Pressstrecke eine annähernd linear verlaufende erste Teilkennlinie 60h mit einer ersten Steigung auf. An die erste Teilkennlinie 60h schließt sich eine annähernd linear verlaufende zweite Teilkennlinie 62h mit einer zweiten Steigung an, die größer ist als die erste Steigung. In einem Übergangsbereich 68h zwischen der ersten Teilkennlinie 60h und der zweiten Teilkennlinie 62h weist die Federkennlinie 56h einen Knick 70h auf.

An die zweite Teilkennlinie 62h schließt sich eine konvex gekrümmte dritte Teilkennlinie 64h an. Ein Übergang zwischen der zweiten Teilkennlinie 62h und der dritten Teilkennlinie 64h ist frei von einem Knick.

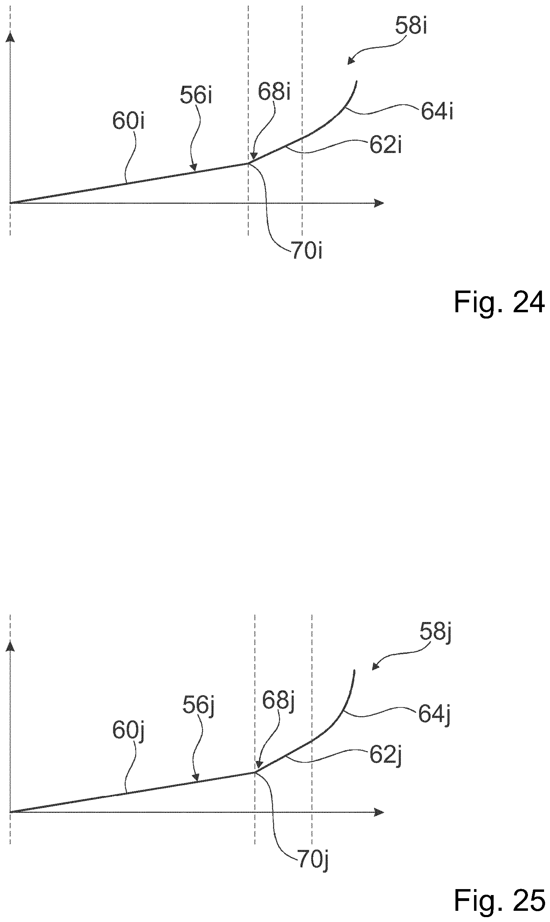

Die Figur 24 zeigt eine Federkennlinie 56i eines Teststücks einer Wendel eines neunten Drahtgeflechts in einem schematischen Pressstrecke-Kraft-Diagramm 58i. Die Federkennlinie 56i wurde analog zu der Federkennlinie 56a im Ausführungsbeispiel der Figuren 1 bis 14 mittels eines Pressens des Teststücks der Wendel entlang einer Pressstrecke ermittelt. Das neunte Drahtgeflecht ist aus einem hochfesten Stahldraht mit einem Drahtdurchmesser von 4 mm gefertigt. Das neunte Drahtgeflecht weist eine Schenkellänge von etwa 80 mm auf.

Die Federkennlinie 56i weist ausgehend von einem Beginn der Pressstrecke eine annähernd linear verlaufende erste Teilkennlinie 60i mit einer ersten Steigung auf. An die erste Teilkennlinie 60i schließt sich eine annähernd linear verlaufende zweite Teilkennlinie 62i mit einer zweiten Steigung an, die größer ist als die erste Steigung. In einem Übergangsbereich 68i zwischen der ersten Teilkennlinie 60i und der zweiten Teilkennlinie 62i weist die Federkennlinie 56i einen Knick 70i auf.

An die zweite Teilkennlinie 62i schließt sich eine konvex gekrümmte dritte Teilkennlinie 64i an. Ein Übergang zwischen der zweiten Teilkennlinie 62i und der dritten Teilkennlinie 64i ist frei von einem Knick.

Die Figur 25 zeigt eine Federkennlinie 56j eines Teststücks einer Wendel eines zehnten Drahtgeflechts in einem schematischen Pressstrecke-Kraft-Diagramm 58j. Die Federkennlinie 56j wurde analog zu der Federkennlinie 56a im Ausführungsbeispiel der Figuren 1 bis 14 mittels eines Pressens des Teststücks der Wendel entlang einer Pressstrecke ermittelt. Das zehnte Drahtgeflecht ist aus einem hochfesten Stahldraht mit einem Drahtdurchmesser von 4 mm gefertigt. Das zehnte Drahtgeflecht weist eine Schenkellänge von etwa 65 mm auf.

Die Federkennlinie 56j weist ausgehend von einem Beginn der Pressstrecke eine annähernd linear verlaufende erste Teilkennlinie 60j mit einer ersten Steigung auf. An die erste Teilkennlinie 60j schließt sich eine annähernd linear verlaufende zweite Teilkennlinie 62j mit einer zweiten Steigung an, die größer ist als die erste Steigung. In einem Übergangsbereich 68j zwischen der ersten Teilkennlinie 60j und der zweiten Teilkennlinie 62j weist die Federkennlinie 56j einen Knick 70j auf.

An die zweite Teilkennlinie 62j schließt sich eine konvex gekrümmte dritte Teilkennlinie 64j an. Ein Übergang zwischen der zweiten Teilkennlinie 62j und der dritten Teilkennlinie 64j ist frei von einem Knick.

**Bezugszeichen**

10 Drahtgeflecht

| 12 | Wendel |
|---|---|
| 14 | Wendel |
| 16 | Längselement |
| 18 | Draht |
| 20 | Schenkel |
| 22 | Schenkel |
| 24 | Biegestelle |
| 26 | Steigungswinkel |
| 28 | Längsrichtung |
| 30 | Steigungswinkel |
| 32 | Biegestelle |
| 34 | Biegebereich |
| 36 | Übergangsbereich |
| 38 | Übergangsbereich |
| 40 | Biegezylinder |
| 42 | Teststück |
| 44 | Quererstreckung |
| 46 | Teststück |
| 48 | Platte |
| 50 | Platte |
| 52 | Pressstrecke |
| 54 | Frontalrichtung |
| 56 | Federkennlinie |
| 58 | Pressstrecke-Kraft-Diagramm |
| 60 | Teilkennlinie |
| 62 | Teilkennlinie |
| 64 | Teilkennlinie |
| 66 | Pressstrecken-Wertebereich |
| 68 | Übergangsbereich |
| 70 | Knick |
| 72 | Pressstrecken-Wertebereich |
| 74 | Biegevorrichtung |
| 76 | Wendelrohling |
| 78 | Biegeeinheit |
| 80 | Biegedorn |
| 82 | Biegetisch |
| 84 | Vorschubeinheit |
| 86 | Vorschubachse |
| 88 | Vorschubrichtung |
| 90 | Geometrieeinstelleinheit |
| 92 | Querhubeinheit |
| 94 | Haupterstreckungsrichtung |
| 96 | Anschlagseinheit |
| 98 | Anschlagselement |
| 100 | Anschlagsfläche |
| 102 | Schwenkachse |
| 104 | Halteeinheit |
| 106 | Halteelement |
| 108 | Schwenkachse |
| 109 | Längsachse |
| 110 | Längsachse |
| 112 | Haupterstreckungsrichtung |
| 114 | Längsachse |
| 116 | Übergangspunkt |
| 118 | Kreuzungswinkel |
| 120 | Biegetestvorrichtung |
| 122 | Spannbacke |
| 124 | Spannbacke |

126 Biegezylinder
128 Biegehebel
130 Mitnehmer
132 Mitnehmer
133 Biegelänge
134 Pressvorrichtung
136 Pressstrecke-Achse
138 Kraft-Achse
140 Biegeraum
142 Umlaufrichtung
144 Längsachse
146 Ausrichtelement
148 Zuführelement
150 Führungstisch
152 Führungsrolle
154 Führungsrolle
156 Querhubrichtung
158 Kopplungselement
160 Querhub
162 Kopplungselement
164 Riemen
166 Biegestelle
168 Kreisbahn
170 Lagerbolzen
172 Führungskulisse
174 Führungskulisse
176 Verfahrensschritt
178 Verfahrensschritt
180 Verfahrensschritt

**Patentansprüche**

1. Drahtgeflecht (10a; 10d; 10e), insbesondere Sicherheitsnetz, mit mehreren ineinander geflochtenen Wendeln (12a, 14a; 12d; 12e), von denen wenigstens eine Wendel (12a; 12d, 12e) aus zumindest einem Einzeldraht, einem Drahtbündel, einer Drahtlitze, einem Drahtseil und/oder einem anderen Längselement (16a; 16d; 16e) mit zumindest einem Draht (18a; 18d; 18e) gefertigt ist und zumindest einen ersten Schenkel (20a; 20d; 20e), zumindest einen zweiten Schenkel (22a; 22d; 22e) sowie zumindest eine den ersten Schenkel (20a; 20d; 20e) und den zweiten Schenkel (22a; 22d; 22e) miteinander verbindende Biegestelle (24a; 24d; 24e) umfasst, wobei in einer Längsbetrachtung parallel zu einer Längsrichtung (28a; 28d; 28e) der Wendel (12a; 12d; 12e) die Biegestelle (24a; 24d; 24e) zumindest einen Biegebereich (34a; 34d; 34e) mit einer Biegekrümmung und zumindest einen mit dem ersten Schenkel (20a; 20d; 20e) verbundenen ersten Übergangsbereich (36a; 36d; 36e) mit einer von der Biegekrümmung verschiedenen ersten Übergangskrümmung umfasst, wobei der erste Schenkel (20a; 20b; 20c) und/oder der zweite Schenkel (22a; 22b; 22c) zumindest abschnittsweise einem geraden Verlauf folgt und wobei der Draht (18a; 18b; 18c) zumindest teilweise aus hochfestem Stahl mit einer Zugfestigkeit von wenigstens 800 N mm$^{-2}$ gefertigt ist.

2. Drahtgeflecht (10a; 10d; 10e) nach Anspruch 1, **dadurch gekennzeichnet, dass** in der Längsbetrachtung die Biegestelle (24a; 24d; 24e) zumindest einen mit dem zweiten Schenkel (22a; 22d; 22e) verbundenen zweiten Übergangsbereich (38a; 38d; 38e) mit einer von der Biegekrümmung verschiedenen zweiten Übergangskrümmung umfasst.

3. Drahtgeflecht (10a; 10d; 10e) nach Anspruch 1 oder 2, **dadurch gekennzeichnet, dass** die erste Übergangskrümmung und die zweite Übergangskrümmung identisch sind.

4. Drahtgeflecht (10a; 10d; 10e) nach Anspruch 2 oder 3, **dadurch gekennzeichnet, dass** in der Längsbetrachtung der erste Übergangsbereich (36a; 36d; 36e) und der zweite Übergangsbereich (38a; 38d; 38e) spiegelsymmetrisch ausgebildet sind.

5. Drahtgeflecht (10a; 10d; 10e) nach einem der vorhergehenden Ansprüche, **dadurch gekennzeichnet, dass** die Biegekrümmung größer ist als die erste Übergangskrümmung.

6. Drahtgeflecht (10a; 10d; 10e) nach einem der vorhergehenden Ansprüche, **dadurch gekennzeichnet, dass** der Biegebereich (34a; 34d; 34e) einem kreisbogenförmigen Verlauf folgt.

7. Drahtgeflecht (10a; 10b; 10c) nach einem der vorhergehenden Ansprüche, **dadurch gekennzeichnet, dass** in einer Querbetrachtung parallel zu einer Haupterstreckungsebene der Wendel (12a; 12b; 12c) und senkrecht zu der Längsrichtung (28a; 28b; 28c) der Wendel (12a; 12b; 12c) die Biegestelle (24a; 24b; 24c) zumindest abschnittsweise einem zumindest annähernd geraden Verlauf folgt.

8. Drahtgeflecht (10a; 10b ; 10c) nach einem der vorhergehenden Ansprüche, **dadurch gekennzeichnet, dass** in der Querbetrachtung die Wendel (12a; 12b; 12c) zumindest abschnittsweise einem stufigen Verlauf folgt.

9. Drahtgeflecht (10a; 10b ; 10c) nach einem der vorhergehenden Ansprüche, **dadurch gekennzeichnet, dass** der erste Schenkel (20a; 20b; 20c) zumindest abschnittsweise in einer ersten Ebene und der zweite Schenkel (22a; 22b; 22c) zumindest abschnittsweise in einer zu der ersten Ebene parallelen zweiten Ebene verlaufen, wobei die erste Ebene eine Vorderseite des Drahtgeflechts (10a; 10d; 10e) und die zweite Ebene eine Rückseite des Drahtgeflechts (10a; 10d; 10e) ist oder umgekehrt.

10. Verfahren zur Herstellung einer Wendel (12a) für ein Drahtgeflecht (10a), insbesondere für ein Sicherheitsnetz, insbesondere nach einem der vorhergehenden Ansprüche, wobei die Wendel (12a) aus zumindest einem Einzeldraht, einem Drahtbündel, einer Drahtlitze, einem Drahtseil und/oder einem anderen Längselement (16a) mit zumindest einem Draht (18a) gefertigt wird und wobei mittels Biegen zumindest ein erster Schenkel (20a), zumindest ein zweiter Schenkel (22a) sowie zumindest eine den ersten Schenkel (20a) und den zweiten Schenkel (22a) miteinander verbindende Biegestelle (24a) der Wendel (12a) gefertigt werden, **dadurch gekennzeichnet, dass** die Wendel (12a) mittels Biegen derart gefertigt wird, dass in einer Längsbetrachtung parallel zu einer Längsrichtung (28a) der Wendel (12a) die Biegestelle (24a) zumindest einen Biegebereich (34a) mit einer Biegekrümmung und zumindest einen mit dem ersten Schenkel (20a) verbundenen ersten Übergangsbereich (36a) mit einer von der Biegekrümmung verschiedenen ersten Übergangskrümmung umfasst und dass der erste Schenkel (20a; 20b; 20c) und/oder der zweite Schenkel (22a; 22b; 22c) zumindest abschnittsweise einem geraden Verlauf folgt, wobei der Draht (18a; 18b; 18c) der Wendel (12a) zumindest teilweise aus hochfestem Stahl mit einer Zugfestigkeit von wenigstens 800 N mm$^{-2}$ gefertigt ist.

**Claims**

1. Wire netting (10a; 10d; 10e), in particular safety net, with a plurality of helices (12a; 12d; 12e) which are braided with one another and at least one of which is manufactured of at least one single wire, a wire bundle, a wire strand, a wire rope and/or another longitudinal element (16a; 16d; 16e) with at least one wire (18a; 18d; 18e), and which comprises at least one first leg (20a; 20d; 20e), at least one second leg (22a; 22d; 22e) and at least one bending region (24a; 24d; 24e) connecting the first leg (20a; 20d; 20e) and the second leg (22a; 22d; 22e) to one another,

   wherein, in a longitudinal view in parallel to a longitudinal direction (28a; 28d; 28e) of the helix (12a; 12d; 12e), the bending region (24a; 24d; 24e) comprises at least one bending zone (34a; 34d; 34e) with a bending curvature and at least one first transition zone (36a; 36d; 36e) which is connected to the first leg (20a; 20d; 20e) and has a first transition curvature that differs from the bending curvature,
   wherein the first leg (20a; 20b; 20c) and/or the second leg (22a; 22b; 22c) at least section-wise follow/s a straight course, and
   wherein the wire (18a; 18b; 18c) is at least partially made of a high-tensile steel having a tensile strength of at least 800 N mm$^{-2}$.

2. Wire netting (10a; 10d; 10e) according to claim 1,
   **characterized in that** in the longitudinal view, the bending region (24a; 24d; 24e) comprises at least one second transition zone (38a; 38d; 38e) which is connected to the second leg (22a; 22d; 22e) and has a second transition curvature differing from the bending curvature.

3. Wire netting (10a; 10d; 10e) according to claim 1 or 2,

EP 3 574 145 B1

**characterized in that** the first transition curvature and the second transition curvature are identical.

4. Wire netting (10a; 10d; 10e) according to claim 2 or 3,
   **characterized in that** in the longitudinal view, the first transition zone (36a; 36d; 36e) and the second transition zone (38a; 38d; 38e) are embodied mirror-symmetrically.

5. Wire netting (10a; 10d; 10e) according to one of the preceding claims, **characterized in that** the bending curvature is larger than the first transition curvature.

6. Wire netting (10a; 10d; 10e) according to one of the preceding claims, **characterized in that** the bending zone (34a; 34d; 34e) follows a circular-arc-shaped course.

7. Wire netting (10a; 10b; 10c) according to one of the preceding claims, **characterized in that** in a transverse view in parallel to a main extension plane of the helix (12a; 12b; 12c) and perpendicularly to the longitudinal direction (28a; 28b; 28c) of the helix (12a; 12b; 12c), the bending region (24a; 24b; 24c) at least section-wise follows an at least approximately straight course.

8. Wire netting (10a; 10b; 10c) according to one of the preceding claims, **characterized in that** in the transverse view, the helix (12a; 12b; 12c) at least section-wise follows a stepped course.

9. Wire netting (10a; 10b; 10c) according to one of the preceding claims, **characterized in that** the first leg (20a; 20b; 20c) extends at least section-wise in a first plane and the second leg (22a; 22b; 22c) extends at least section-wise in a second plane that is parallel to the first plane, the first plane being a front side of the wire netting (10a; 10d; 10e) and the second plane being a rear side of the wire netting (10a; 10d; 10e) or vice versa.

10. A method for manufacturing a helix (12a) for a wire netting (10a), in particular for a safety net, in particular according to one of the preceding claims, wherein the helix (12a) is manufactured of at least one single wire, a wire bundle, a wire strand, a wire rope and/or another longitudinal element (16a) with at least one wire (18a), and wherein at least one first leg (20a), at least one second leg (22a) and at least one bending region (24a) of the helix (12a) connecting the first leg (20a) and the second leg (22a) to one another are manufactured by way of bending,

    **characterized in that** the helix (12a) is manufactured by bending in such a way that, in a longitudinal view in parallel to a longitudinal direction (28a) of the helix (12a), the bending region (24a) comprises at least one bending zone (34a) with a bending curvature and at least one first transition zone (36a) which is connected to the first leg (20a) and has a first transition curvature that differs from the bending curvature,
    and that the first leg (20a; 20b; 20c) and/or the second leg (22a; 22b; 22c) at least section-wise follow/s a straight contour,
    wherein the wire (18a; 18b; 18c) of the helix (12a) is at least partially made of a high-tensile steel having a tensile strength of at least 800 N mm$^{-2}$.

**Revendications**

1. Treillis métallique (10a ; 10d ; 10e), en particulier filet de sauvegarde, ayant une pluralité d'hélices (12a, 14a ; 12d ; 12e) qui sont tressées les unes avec les autres, dont au moins une hélice (12a ; 12d ; 12e) est fabriquée à partir d'au moins un fil métallique unique, un faisceau en fil métallique, un cordon en fil métallique, un câble en fil métallique et/ou un autre élément longitudinal (16a ; 16d ; 16e) avec au moins un fil métallique (18a ; 18d ; 18e), et comprend au moins une première branche (20a ; 20d ; 20e), au moins une deuxième branche (22a ; 22b ; 22e) et au moins une zone de pliage (24a ; 24d ; 24e) reliant la première branche (20a ; 20d ; 20e) et la deuxième branche (22a ; 22b ; 22e) l'une avec l'autre,

   où dans une vue longitudinale en parallèle à une direction longitudinale (28a ; 28d ; 28e) de l'hélice (12a ; 12d ; 12e) la zone de pliage (24a ; 14d ; 24e) comprend au moins une région de pliage (34a ; 34d ; 34e), ayant une courbure de pliage, et au moins une première zone de transition (36a ; 36d ; 36e), reliée avec la première branche (20a ; 20d ; 20e) et ayant une première courbure de transition qui diffère de la courbure de pliage,
   où la première branche (20a ; 20b ; 20c) et/ou la deuxième branche (22a ; 22b ; 22c) suivent/suit au moins par sections un contour droit et
   où le fil métallique (18a ; 18b ; 18c) est fabriqué au moins partiellement d'un acier ultra-résistant avec une

26

résistance à traction d'au moins 800 N mm$^{-2}$.

2. Treillis métallique (10a ; 10d ; 10e) selon la revendication 1,
**caractérisé en ce que** dans la vue longitudinale la zone de pliage (24a ; 24d ; 24e) comprend au moins une deuxième zone de transition (38a ; 38d ; 38e) reliée avec la deuxième branche (22a ; 22d ; 22e) et ayant une deuxième courbure de transition qui diffère de la courbure de pliage.

3. Treillis métallique (10a ; 10d ; 10e) selon la revendication 1 ou 2,
**caractérisé en ce que** la première courbure de transition et la deuxième courbure de transition sont identiques.

4. Treillis métallique (10a ; 10d ; 10e) selon la revendication 2 ou 3,
**caractérisé en ce que** dans la vue longitudinale la première zone de transition (36a ; 36d ; 36e) et la deuxième zone de transition (38a ; 38d ; 38e) sont réalisées symétriquement en miroir.

5. Treillis métallique (10a ; 10d ; 10e) selon l'une des revendications précédentes, **caractérisé en ce que** la courbure de pliage est supérieure à la première courbure de transition.

6. Treillis métallique (10a ; 10d ; 10e) selon l'une des revendications précédentes, **caractérisé en ce que** la région de pliage (34a ; 34d ; 34e) suit un contour en forme d'arc de cercle.

7. Treillis métallique (10a ; 10b ; 10c) selon l'une des revendications précédentes, **caractérisé en ce que** dans une vue transversale en parallèle à un plan d'étendue principale de l'hélice (12a ; 12b ; 12c) et perpendiculairement à la direction longitudinale (28a ; 28b ; 28c) de l'hélice (12a ; 12b ; 12c) la zone de pliage (24a ; 24b ; 24c) suit au moins par sections un contour au moins approximativement droit.

8. Treillis métallique (10a ; 10b ; 10c) selon l'une des revendications précédentes, **caractérisé en ce que** dans la vue transversale l'hélice (12a ; 12b ; 12c) suit au moins par sections un contour échelonné.

9. Treillis métallique (10a ; 10b ; 10c) selon l'une des revendications précédentes, **caractérisé en ce que** la première branche (20a ; 20b ; 20c) s'étend au moins par sections dans un premier plan et la deuxième branche (22a ; 22b ; 22c) s'étend au moins par sections dans un deuxième plan qui est parallèle au premier plan,
le premier plan étant une face frontale du treillis métallique (10a ; 10d ; 10e) et le deuxième plan étant une face arrière du treillis métallique (10a ; 10d ; 10e) ou vice versa.

10. Procédé de fabriquer une hélice (12a) pour un treillis métallique (10a), en particulier pour un filet de sauvegarde, en particulier selon l'une des revendications précédentes,

où l'hélice (12a) est fabriquée d'au moins un fil métallique unique, un faisceau en fil métallique, in cordon en fil métallique, un câble en fil métallique et/ou un autre élément longitudinal (16a) avec au moins un fil métallique (18a) et
où au moins une première branche (20a), au moins une deuxième branche (22a) et au moins une zone de pliage (24a) de l'hélice (12a), reliant la première branche (20a) et la deuxième branche (22a), sont fabriquées par pliage,
**caractérisé en ce que** l'hélice (12a) est fabriquée par pliage d'une telle manière que dans une vue longitudinale en parallèle à une direction longitudinale (28a) de l'hélice (12a), la zone de pliage (24a) comporte au moins une région de pliage (34a) avec une courbure de pliage et au moins une première zone de transition (36a) reliée avec la première branche (20a) et ayant une première courbure de transition qui diffère de la courbure de pliage, et que
la première branche (20a ; 20b ; 20c) et/ou la deuxième branche (22a ; 22b ; 22c) suivent/suit au moins par sections un contour droit,
le fil métallique (18a ; 18b ; 18c) de l'hélice (12a) étant fabriqué au moins partiellement d'un acier ultra-résistant avec une résistance à traction d'au moins 800 N mm$^{-2}$.

10a

12a

14a

**Fig. 1**

24a
20a
22a
16a, 18a
109a
12a
54a
28a

**Fig. 2**

112a
110a
24a
26a
109a
20a
22a
12a
16a, 18a
28a

**Fig. 3**

Fig. 4a

Fig. 4b

Fig. 4c

Fig. 4d

Fig. 5a

Fig. 5b

Fig. 5c

Fig. 5d

Fig. 6

Fig. 7

134a

46a, 12a

48a

52a

44a

54a

50a

Fig. 8

58a

138a

62a

68a

64a

56a

116a

60a

70a

66a

72a

136a

Fig. 9

Fig. 10

Fig. 11

Fig. 12

98a 104a 106a 174a

168a

170a

108a,102a

76a

172a

82a 12a

Fig. 13

176a

178a

180a

Fig. 14

Fig. 15

Fig. 16

Fig. 17

20c
24c
22c
12c
30c
28c

Fig. 18

12d  20d  36d
34d
24d
22d
16d,18d  38d

Fig. 19

36e
12e  20e
34e
24e
22e
16e,18e  38e

Fig. 20

Fig. 21

Fig. 22

Fig. 23

Fig. 24

Fig. 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1926114 A
- WO 9943894 A1